(19) Europäisches Patentamt
European Patent Office
Office européen des brevets

(11) Veröffentlichungsnummer : **0 672 730 A1**

(12) **EUROPÄISCHE PATENTANMELDUNG**

(21) Anmeldenummer : **95810148.7**

(51) Int. Cl.[6] : **C09B 67/00,** B41M 5/145

(22) Anmeldetag : **08.03.95**

(30) Priorität : **16.03.94 CH 782/94**

(43) Veröffentlichungstag der Anmeldung :
**20.09.95 Patentblatt 95/38**

(84) Benannte Vertragsstaaten :
**BE CH DE ES FR GB IT LI**

(71) Anmelder : **CIBA-GEIGY AG**
**Klybeckstrasse 141**
**CH-4002 Basel (CH)**

(72) Erfinder : **Brunner, Frédéric, Dr.**
**Les Esserts 44**
**CH-2054 Chezard (CH)**
Erfinder : **Graf, René**
**Reichensteinerstrasse 30**
**CH-4132 Muttenz (CH)**

(54) **Feste Pastillen aus Farbbildnermischungen.**

(57) Beschrieben werden Gemische von Farbbildnern in Pastillenform, die mindestens eine spezifische Fluoranverbindung sowie eine spezifische Phthalidverbindung enthalten.

Die erfindungsgemässen Farbbildnergemisch-Pastillen finden Verwendung in druck- und wärmeempfindlichen Aufzeichnungmaterialien und zeichnen sich durch eine hervorragende Lagerstabilität aus.

EP 0 672 730 A1

Die vorliegende Erfindung betrifft feste Pastillen aus Mischungen von Farbbildnern (Colourformern), ein Verfahren zur Herstellung von festen Pastillen aus Mischungen von Farbbildnern, sowie die Verwendung dieser festen Pastillen in druck- und wärmeempfindlichen Aufzeichnungsmaterialien.

Beim Verpacken, Wiegen und Mischen von pulverförmigen Farbstoffen kann oft Staub entstehen, der für die Beteiligten eine potentielle Feuer- und Gesundheitsgefahr darstellen kann. Ausserdem tritt ein nicht unerheblicher Anteil an Materialverlust durch Filterstaubanfall auf.

Ein weiterer Nachteil eines pulverförmigen Farbstoffs ist darin zu sehen, dass er während der Lagerung und des Gebrauchs zur Agglomeration tendiert, was wiederum zu unerwünschtem uneinheitlichem Verhalten führt, wie z.B. unterschiedlichem Löseverhalten in organischen Lösungsmitteln.

Ein fester Farbstoff in Form von nicht-agglomerierenden, frei-fliessenden Pastillen, bei denen keinerlei Staubprobleme auftreten, ist z.B. aus der GB-A-2-239,872 bekannt. Die Pastillen werden dabei durch Abkühlen von Tropfen eines geschmolzenen Farbstoffes zur Verfestigung hergestellt. Die Pastillen können mit einem hohen Grad an einheitlicher Grösse produziert werden, so dass sie auch gleichmässiges Verhalten in Prozessabläufen zeigen, so wie z.B. Löseverhalten in organischen Lösungsmitteln.

Als Farbstoffe für die Herstellung der Pastillen sind insbesondere Farbbildner geeignet, die in druck- oder wärmeempfindlichen Aufzeichnungsmaterialien zum Einsatz kommen.

Überraschenderweise wurde nun gefunden, dass gewisse Mischungen von Farbbildnern in Form von festen Pastillen hinsichtlich ihrer applikatorischen Eigenschaften den bekannten Pastillenmischungen von Farbbildnern überlegen sind.

Gegenstand der vorliegenden Erfindung ist also ein Gemisch aus Farbbildnern in Form von festen Pastillen, enthaltend

(a) mindestens eine Fluoranverbindung der Formel

(1) 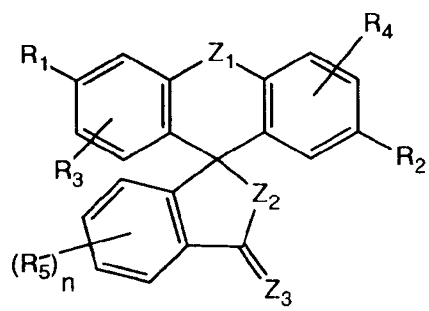 ,

(b) mindestens ein Phthalid der Formel

(2) 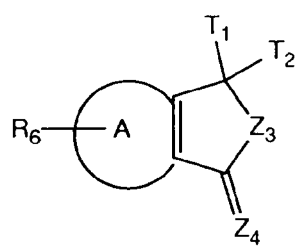 ,

und gegebenenfalls

(c) mindestens eine Triarylmethanverbindung der Formel

(3) 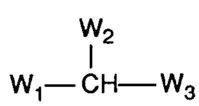

$d_1$) mindestens eine Bis-Chinazolinverbindung der Formel

(4a) 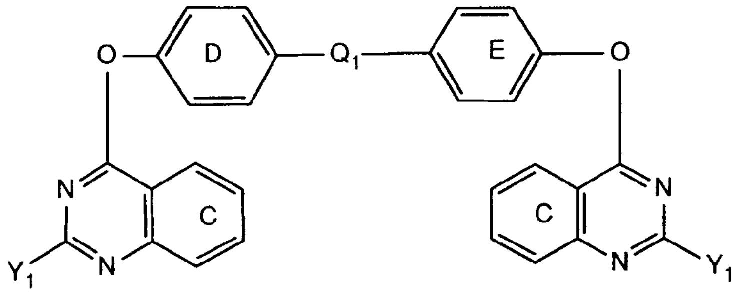

oder
($d_2$) eine Chinazolinverbindung der Formel

(4b) 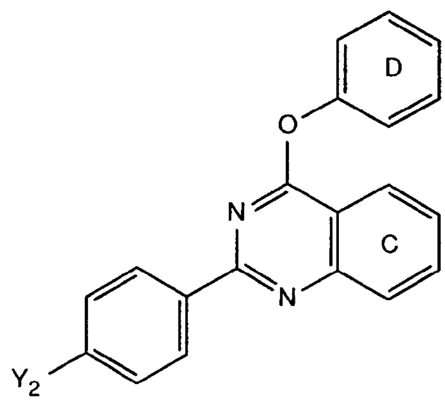 ,

(e) mindestens eine Lactamverbindung der Formel

(5) 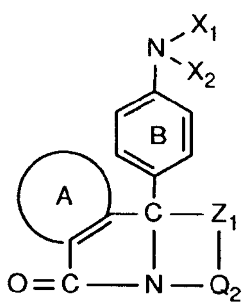

(f) mindestens eine Oxazinverbinung der Formel

(6) 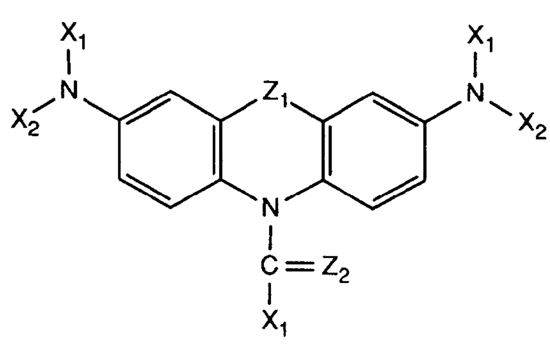

oder

(g) mindestens eine 1,3-Benzoxazinverbindung der Formel

(7) 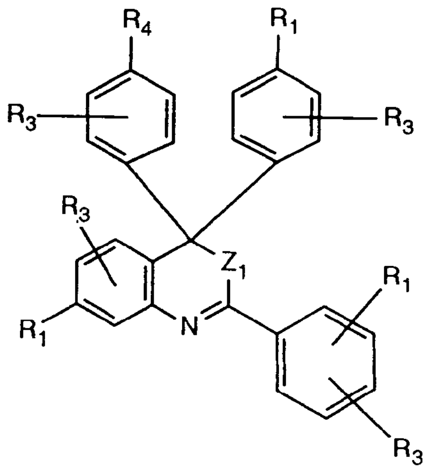

worin

$R_1$ einen Rest der Formel

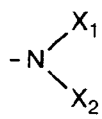 ;

$R_2$ Wasserstoff; Niederalkyl; -(CO)X; einen Rest der Formel

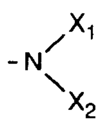 ;

$R_3$ Wasserstoff; oder Niederalkyl;

$R_4$ Wasserstoff; Niederalkyl; Halogen; einen Rest der Formel

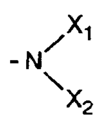 ;

-O-X;

$R_5$ und $R_6$ unabhängig voneinander Wasserstoff; Halogen; Niederalkyl; $-NO_2$; einen Rest der Formel

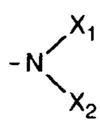 ;

$Q_1$ die direkte Bindung; einen aliphatischen, cycloaliphatischen oder aromatischen Kohlenwasserstoffrest; Arylalkylen; -CO-; -S-; oder $-SO_2-$ ;

$Q_2$ $C_1$-$C_{12}$-Alkylen, Aryl-$C_1$-$C_4$-Alkylen, 1,2-Cycloalkylen, 1,2- oder 1,8-Arylen oder Aralkylen;

$T_1$ und $T_2$ unabhängig voneinander einen Rest der Formel

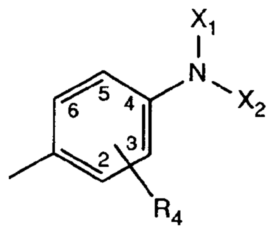

oder

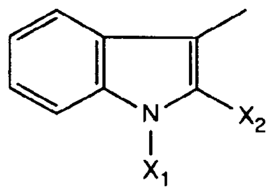

$W_1$, $W_2$ und $W_3$ unabhängig voneinander einen Rest der Formel

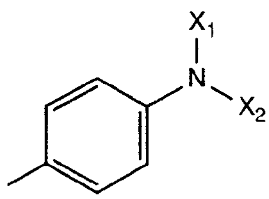

oder

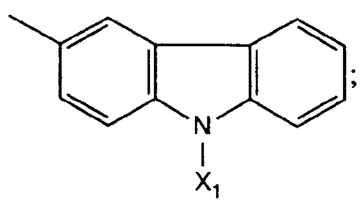 ;

$X_1$ und $X_2$, unabhängig voneinander, je Wasserstoff; unsubstituiertes oder durch Halogen, Hydroxy, Cyano, Tetrahydrofuryl oder Niederalkoxy substituiertes Alkyl mit höchstens 12 Kohlenstoffatomen; Acyl mit 1 bis 8 Kohlenstoffatomen; Cycloalkyl mit 5 bis 10 Kohlenstoffatomen; oder unsubstituiertes oder durch Halogen, Cyano, Nitro, Trifluormethyl, Niederalkyl, Niederalkoxy, Niederalkoxycarbonyl, -NX'X" oder 4-X'X"N-phenylamino ringsubstituiertes Aralkyl oder Aryl, worin X' und X", unabhängig voneinander, Wasserstoff, Niederalkyl, Cyclohexyl, Benzyl oder Phenyl darstellen; oder ($X_1$ und $X_2$) zusammen mit dem gemeinsamen Stickstoffatom einen fünf- oder sechsgliedrigen, vorzugsweise gesättigten, heterocyclischen Rest bedeuten.

n eine ganze Zahl von 1 bis 4,

X Wasserstoff; Hydroxy; $C_1$-$C_8$-Alkyl; $C_1$-$C_8$-Alkoxy; $C_1$-$C_8$-Halogenalkyl; unsubstituiertes oder im Phenylrest durch Halogen, $C_1$-$C_4$-Alkyl, $C_1$-$C_4$-Halogenalkyl, $C_1$-$C_4$-Alkoxy substituiertes Phenyl; Phenyl-$C_1$-$C_4$-Alkyl oder Phenyl-$C_1$-$C_4$-Alkoxy;

$Y_1$ und $Y_2$, unabhängig voneinander, den Rest einer kupplungsfähigen Verbindung; $Z_1$, $Z_2$, $Z_3$ und $Z_4$, unabhängig voneinander

$-NX_1;$

| | |
|---|---|
| | O oder S; |
| und | |
| der Ring A | einen aromatischen oder heteroaromatischen Rest mit 6 Ringatomen, der einen aromatischen annellierten Ring aufweisen kann, wobei sowohl der Ring A als auch der annellierte Ring substituiert sein können; |
| der Ring B | einen unsubstituierten oder durch Halogen, Niederalkyl, $C_1$-$C_{12}$-Alkoxy, Benzyloxy, Niederalkylcarbonylamino, Mono- oder Diniederalkylamino substituierten Benzolkern; und |
| die Ringe C, D und E | unsubstituiert oder durch Cyano, Nitro, Halogen, Niederalkyl, Phenyl, Benzyl, Niederalkoxy oder Niederalkoxycarbonyl substituiert sind. |

In der Literatur werden die einzelnen Substituentenpositionen im Fluoranring (Formel (1)) unterschiedlich numeriert. In der vorliegenden Anmeldung wird die folgende Numerierung verwendet:

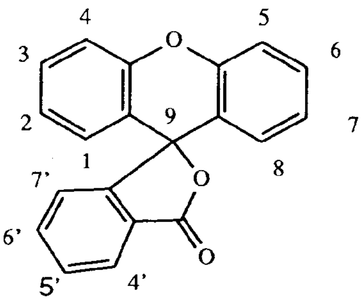 .

Im Rahmen der vorstehenden Definition haben die jeweiligen Substituenten oder Radikale insbesondere die folgenden Bedeutungen:

Halogen ist Fluor, Chlor oder Brom, insbesondere Fluor oder Chlor.

Alkyl bedeutet im Rahmen der jeweiligen Definition geradkettiges oder verzweigtes Alkyl. Beispiele solcher Alkylreste sind Methyl, Ethyl, n-Propyl, Isopropyl, n-Butyl, 1-Methylbutyl, sek.Butyl, tert.Butyl, n-Pentyl, Amyl, Isoamyl, n-Hexyl, 2-Ethyl-hexyl, n-Heptyl, n-Octyl, Isooctyl, 1,1,3,3-Tetramethylbutyl.

Niederalkoxy stellen solche Gruppen oder Gruppenbestandteile dar, die 1 bis 6, insbesondere 1 bis 4 Kohlenstoffatome aufweisen. Beispiele für derartige Gruppen sind Methoxy, Ethoxy, Isopropoxy, Isobutoxy, tert.Butoxy oder Amyloxy.

Mononiederalkylamino ist insbesondere Methylamino, Ethylamino, Propylamino, Butylamino und Pentylamino. Diniederalkylamino umfaßt sowohl die gemischten wie auch die symmetrisch substituierten Radikale, wie Methylethylamino; Dimethylamino, Diethylamino, Methylpropylamino, Methylbutylamino, Di-n-propylamino, Di-isopropylamino, Di-n-butylamino und Di-n-pentylamino etc..

$Q_1$ in der Bedeutung eines Alkylenrestes weisen vorteilhafterweise 2 bis 6 Kohlenstoffatome, vorzugsweise 2 oder 3 Kohlenstoffatome auf, die geradkettig oder verzweigt sein können. Es handelt sich beispielsweise um die $-CH_2CH_2-$,

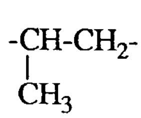 ,

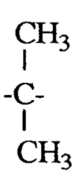 , 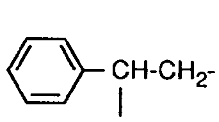 , 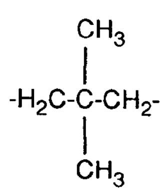 Gruppe

und besonders um die $-CH_2CH_2CH_2-$-Gruppe.

$Q_1$ als verzweigter Alkylenrest umfasst ausserdem spirocyclisch anellierte Reste, wie

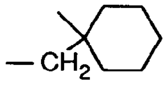 , 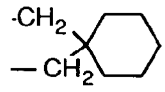 , 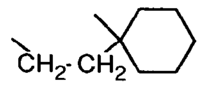 , 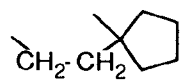 , 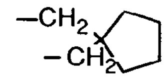

oder

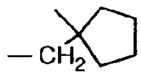 ,

die unsubstituiert oder ihrerseits bis zu dreifach durch $C_1$-$C_4$-Alkyl substituiert sein können.

Als Cycloalkylen für $Q_1$ kommt vor allem die 1,2-Cyclohexylengruppe und 1,2-Cyclopentylen, bevorzugt 1,2-Cyclohexylen, in Frage.

Als Arylen stellt $Q_1$ vorzugsweise einen 1,2-Phenylenrest dar, der unsubstituiert oder durch Halogen, Methyl oder Methoxy substituiert ist. Vorteilhafterweise kann $Q_1$ als Arylen ein 1,8-Naphthylenrest oder ein Diphenylenrest darstellen.

Vorzugsweise bedeutet $Q_1$ 1,2-Phenylen, 1,2-Cyclohexylen, 1,8-Naphthylen, 1,2-Ethylen ($-CH_2CH_2-$),

Neopentylen $(-CH_2-\underset{CH_3}{\overset{CH_3}{C}}-CH_2-)$, $-\underset{CH_3}{\overset{CH_3}{C}}-$ ,

1,2-Propylen $(-\underset{CH_3}{C}HCH_2-)$

oder vor allem 1,3-Propylen ($-CH_2-CH_2-CH_2-$).

Sind die Alkylreste in $X_1$ und $X_2$ substituiert, so handelt es sich vor allem um Cyanoalkyl, Halogenalkyl, Hydroxyalkyl, Niederalkoxyalkyl, jeweils vorzugsweise mit insgesamt 2 bis 8 Kohlenstoffatomen, wie z.B. 2-Cyanoethyl, 2-Chlorethyl, 2-Chlorpropyl, 2-Hydroxyethyl, 3-Hydroxypropyl, 2-Methoxyethyl, 2-Ethoxyethyl, 2,3-Dihydroxypropyl, 2-Hydroxy-2-chlorpropyl, 3-Methoxypropyl, 4-Methoxybutyl, Trichlormethyl, Trifluormethyl, Tetrafluoroethyl, Tetrachlorethyl oder 4-Propoxybutyl, sowie bei $X_1$ und $X_2$ auch Tetrahydrofurfuryl.

Beispiele für Cycloalkyl in der Bedeutung von $X_1$ und $X_2$ sind Cyclopentyl, Cycloheptyl oder vorzugsweise Cyclohexyl. Die Cycloalkylreste können einen oder mehrere $C_1$-$C_4$-Alkylreste, vorzugsweise Methylgruppen, enthalten und weisen insgesamt 5 bis 10 Kohlenstoffatome auf.

Als Aralkyl können $X_1$ und $X_2$ Phenethyl, Phenylisopropyl oder vor allem Benzyl sein. Als Aryl stellen die X-Reste, sowie auch der Substituent R besonders Naphthyl oder in erster Linie Phenyl dar.

Bevorzugte Substituenten in der Aralkyl- und Arylgruppe der X-Reste sind z.B. Halogen, Cyano, Methyl, Trifluormethyl, Methoxy oder Carbomethoxy. Bevorzugte Substituenten im Arylrest sind z.B. Halogen, Methyl oder Methoxy. Beispiele für derartige araliphatische bzw. aromatische Reste sind Methylbenzyl, 2,4- oder 2,5-Dimethylbenzyl, Chlorbenzyl, Dichlorbenzyl, Cyanobenzyl, Tolyl, Xylyl, Chlorphenyl, Methoxyphenyl, Trifluormethylphenyl, 2,6-Dimethylphenyl oder Carbomethoxyphenyl.

Wenn $X_1$ und $X_2$ zusammen mit dem gemeinsamen Stickstoffatom einen heterocyclischen Rest darstellen, so ist dieser beispielsweise Pyrrolidino, Piperidino, Pipecolino, Morpholino, Thiomorpholino oder Piperazino, z.B. N-Methylpiperazino oder N-Phenylpiperazino. Bevorzugte gesättigte heterocyclische Reste für $-NX_1X_2$ sind Pyrrolidino, Piperidino oder Morpholino.

Die Substituenten $X_1$ und $X_2$ sind vorzugsweise Cyclohexyl, Tolyl, Benzyl, Phenyl, Cyano-Niederalkyl, z.B. 2-Cyanoethyl oder in erster Linie Niederalkyl, wie z.B. Methyl, Ethyl, n-Propyl, Isopropyl, n-Butyl oder Isoamyl. $-NX_1X_2$ ist bevorzugt auch Pyrrolidino, N-Niederalkyl-N-tetrahydrofurfurylamino, 4-Diniederalkylaminophenylamino oder 4-(4'-Phenylamino-phenylamino)-phenylamino.

"Acyl" ist besonders Formyl, Niederalkylcarbonyl, wie z.B. Acetyl oder Propionyl, oder Benzoyl. Weitere Acylreste können Niederalkylsulfonyl, wie z.B. Methylsulfonyl oder Ethylsulfonyl, Niederalkoxysulfonyl, wie z.B. Methoxysulfonyl oder Ethoxysulfonyl, sowie Phenylsulfonyl oder Phenoxysulfonyl sein. Benzoyl und Phenylsulfonyl können durch Halogen, Methyl, Methoxy oder Ethoxy substituiert sein.

Als 6-gliedriger aromatischer Ring stellt A vorzugsweise einen Benzolring dar, der unsubstituiert oder durch Halogen, Cyano, Nitro, Niederalkyl, Niederalkoxy, Niederalkylthio, Niederalkylcarbonyl, Niederalkoxycarbonyl, Amino, Niederalkylamino, Diniederalkylamino oder Niederalkylcarbonylamino substituiert ist. Als 6-gliedriger heterocyclischer Ring stellt A insbesondere einen stickstoffhaltigen Heterocyclus mit aromatischem Charakter, wie z.B. einen Pyridin- oder Pyrazinring dar. Der Ring A kann auch einen annellierten aromatischen Ring, vorzugsweise einen Benzolring aufweisen und stellt somit z.B. einen Naphthalin-, Chinolin- oder Chinoxalinring dar.

Die durch A wiedergegebenen bevorzugten 6-gliedrigen aromatischen oder heterocyclischen Reste sind der 2,3-Pyridino-, 3,4-Pyridino-, 2,3-Pyrazino-, 2,3-Chinoxalino-, 1,2-Naphthalino-, 2,3-Naphthalino- oder 1,2-Benzorest, der unsubstituiert oder durch Halogen, wie Chlor oder Brom, Nitro, Niederalkyl, Niederalkoxy, Niederalkylthio oder eine wie vorstehend definiert gegebenenfalls substituierte Aminogruppe substituiert ist, wobei der unsubstituierte oder durch Chloratome, Niederalkoxy oder vorzugsweise Diniederalkylamino, besonders durch Dimethylamino oder Diethylamino substituierte 1,2-Benzorest besonders bevorzugt ist.

Der Ring B stellt vorteilhafterweise einen unsubstituierten oder durch Halogen, Niederalkyl, Niederalkoxy, Acetylamino oder Diniederalkylamino substituierten Phenylenrest dar. Besonders bevorzugt ist der Ring B ein unsubstituierter oder durch Niederalkoxy substituierter Phenylenrest.

Bei den Fluoranverbindungen der Komponente (a) handelt es sich um Farbbildner, die auch als Einzelkomponenten in druckempfindlichen oder wärmeempfindlichen Aufzeichnungsmaterialien Verwendung finden. Die Verbindungen und Verfahren zu ihrer Herstellung sind z.B. aus der EP-A-0,561,738 bekannt.

Für das erfindungsgemässe Farbbildnergemisch in Form von festen Pastillen stehen Fluoranverbindungen der Formel

(8)

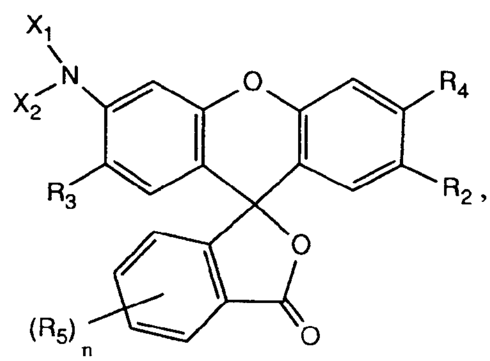

im Vordergrund, worin

$X_1$ und $X_2$, $R_2$, $R_4$, $R_5$ und n die in Formel (1) angegebene Bedeutung haben.

Bevorzugt sind dabei Verbindungen der Formel (8), worin

$X_1$ und $X_2$ unabhängig voneinander $C_1$-$C_{12}$-Alkyl oder Phenyl bedeuten.

Ganz besonders bevorzugt sind dabei Verbindungen der Formel (8), worin

| | |
|---|---|
| $X_1$, $X_2$ und $R_4$ | unabhängig voneinander Niederalkyl und |
| $R_2$ | Niederalkyl; Mononiederalkylamino; Diniederalkylamino; Phenylamino; Diphenylamino; N-Phenylniederalkyl-N-niederalkylamino; N,N-Phenylniederalkylamino;oder einen Rest der Formel -(CO)X; |
| $R_3$ | Wasserstoff oder Niederalkyl; und |
| X | Wasserstoff; Hydroxy; $C_1$-$C_8$-Alkyl; oder $C_1$-$C_8$-Alkoxy; bedeuten. |

In der folgenden Tabelle 1 sind beispielhaft weitere Fluorane aufgeführt, die für das erfindungsgemässe Farbbildnergemisch in Form von festen Pastillen in Betracht kommen.

(1a) 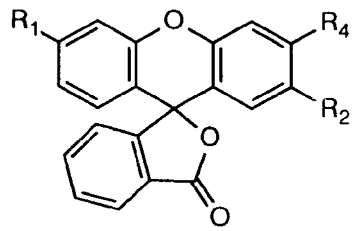

Tabelle 1:

| Verbindung der Formel | $R_1$ | $R_2$ | $R_4$ |
|---|---|---|---|
| (8a) | $-N(C_2H_5)_2$ | $-C(CH_3)_3$ | H |
| (8b) | $-N(C_2H_5)_2$ | $-NHC_8H_{17}$ | H |
| (8c) | 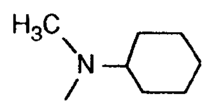 | $-NHC_6H_5$ | $CH_3$ |
| (8d) | $-N(C_2H_5)_2$ | $-NHC_6H_5$ | $CH_3$ |
| (8e) | $-N(C_2H_5)_2$ | $-N(CH_2C_6H_5)_2$ | H |
| (8f) | $-N(C_4H_9)_2$ | $-NHC_6H_5$ | $CH_3$ |
| (8g) | $-N(C_2H_5)_2$ | $-(CO)OC_2H_5$ | H |
| (8h) | $-N(C_2H_5)_2$ | 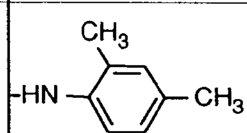 | $CH_3$ |
| (8i) | 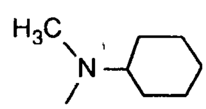 | H | Cl |

Bei den Phthaliden der Komponente (b) handelt es sich um Farbbildner, die auch als Einzelkomponenten in druckempfindlichen oder wärmeempfindlichen Aufzeichnungsmaterialien Verwendung finden. Die Verbindungen der Formel (2) sowie deren Herstellung sind z.B aus der US-A-4,668,790 bekannt.

Für das erfindungsgemässe Farbbildnergemisch in Form von festen Pastillen kommen als Komponente (b) vorzugsweise Verbindungen der Formel

(9) 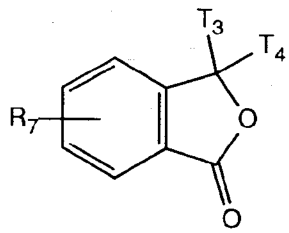

in Betracht, worin
$T_3$ und $T_4$ unabhängig voneinander einen Rest der Formel

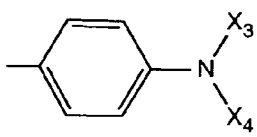

oder

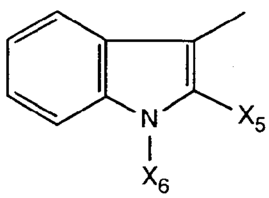

$X_3$, $X_4$, $X_5$ und $X_6$ unabhängig voneinander Wasserstoff oder $C_1$-$C_{12}$-Alkyl; und $R_7$ Wasserstoff, Niederalkyl oder Niederalkylamino bedeuten.

Die folgenden, in der Tabelle 2 aufgeführten Verbindungen sind Beispiele für Phthalidverbindungen, die in dem erfindungsgemässen Pastillengemisch zur Anwendung kommen:

Tabelle 2:

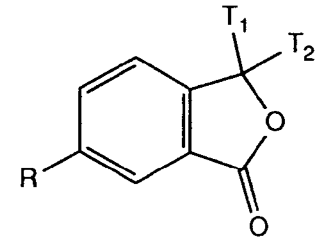

| Verbindung der Formel | R | $T_1$ | $T_2$ |
|---|---|---|---|
| (9a) | H | 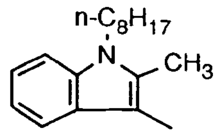 | 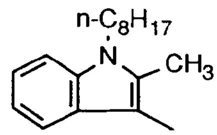 |
| (9b) | H | 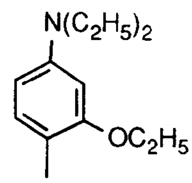 | 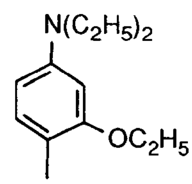 |
| (9c) | H | 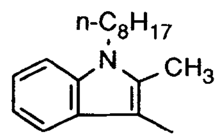 | 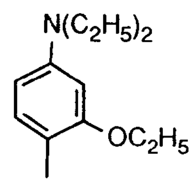 |
| (9d) | $-N(CH_3)_2$ | 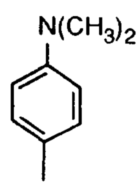 | 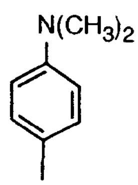 |

Bei den Triarylmethanverbindungen der fakultativen Komponente (c) handelt es sich um Farbbildner, die auch als Einzelkomponenten in druck- oder wärmeempfindlichen Aufzeichnungsmaterialien Verwendung finden. Die Verbindungen der Formel (3) sowie deren Herstellung sind z.B aus der US-A-4,154,463 bekannt.

Vorzugsweise kommen für das erfindungsgemässe Farbbildnergemisch in Form von festen Pastillen als Komponente (c) Triarylmethanverbindungen der Formel

(10)

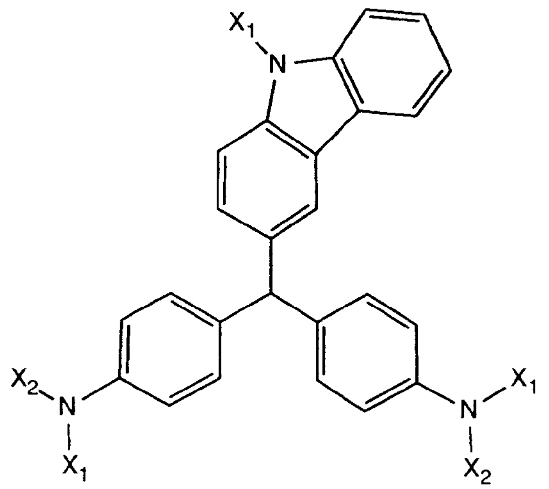

in Betracht, worin

$X_1$ und $X_2$, unabhängig voneinander, je Wasserstoff; unsubstituiertes oder durch Halogen, Hydroxy, Cyano, Tetrahydrofuryl oder Niederalkoxy substituiertes Alkyl mit höchstens 12 Kohlenstoffatomen; Acyl mit 1 bis 8 Kohlenstoffatomen; Cycloalkyl mit 5 bis 10 Kohlenstoffatomen; oder unsubstituiertes oder durch Halogen, Cyano, Nitro, Trifluormethyl, Niederalkyl, Niederalkoxy, Niederalkoxycarbonyl, -NX'X" oder 4-X'X"N-phenylamino ringsubstituiertes Aralkyl oder Aryl, worin X' und X", unabhängig voneinander, Wasserstoff, Niederalkyl, Cyclohexyl, Benzyl oder Phenyl darstellen; oder ($X_1$ und $X_2$) zusammen mit dem gemeinsamen Stickstoffatom einen fünf- oder sechsgliedrigen, vorzugsweise gesättigten, heterocyclischen Rest bedeuten.

Als Beispiel für eine erfindungsgemäss verwendete Triarylmethanverbindung sei die Verbindung der Formel

(10a)

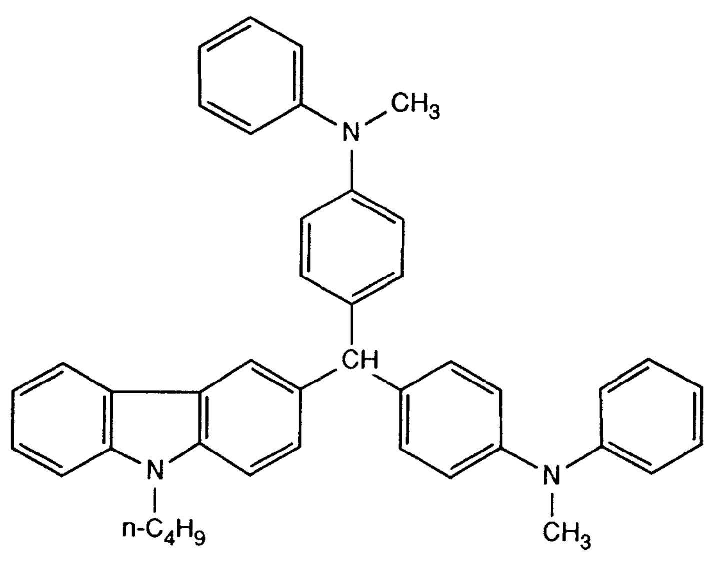

erwähnt

Als fakultative Komponente (d) kommen einerseits Bis-Chinazolinverbindungen (Komponente ($d_1$) der Formel (4a)) bzw. Chinazolinverbindungen (Komponente ($d_2$) der Formel (4b) in Betracht. Es handelt sich dabei um an sich bekannte Farbbildner. Bis-Chinazolinverbindungen (Komponente ($d_1$)) sind z.B. aus der US-A-4,705,775 bekannt. Chinazolinverbindungen (Komponente ($d_2$)) sind z.B. aus der US-A-4,480,096 bekannt.

Vorzugsweise kommen als Bis-Chinazolinverbindungen ($d_1$) Verbindungen der Formel (4a) in Betracht, worin

$Y_1$ einen Aminophenylrest der Formel

(4c) 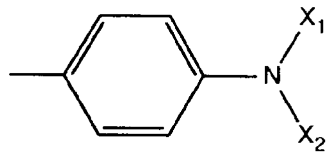 ;

einen Tetrahydrochinolinylrest der Formel

(4d) 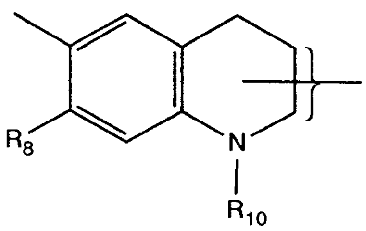 oder (4e) 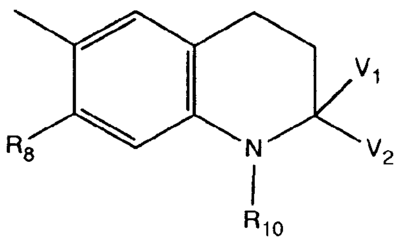 ;

einen Benzomorpholinorest der Formel

(4f) 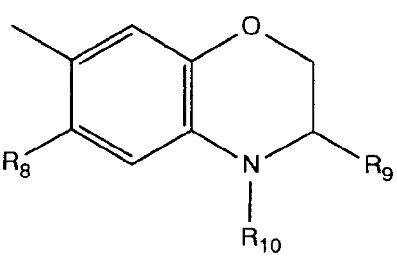 ;

oder einen 5-Indolinrest der Formel

(4g) 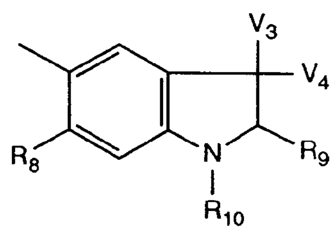

bedeuten, wobei

$R_8$ Wasserstoff; Halogen; Niederalkyl; Niederalkoxy; $C_1$-$C_4$-Acylamino; oder Phenyl

$R_9$ Wasserstoff; Halogen; Hydroxy; Niederalkyl;oder Niederalkoxy,

$R_{10}$ Wasserstoff; $C_1$-$C_8$-Alkyl; $C_2$-$C_6$-Alkoxyalkyl; β-Cyanoethyl; oder Benzyl;

$V_1$, $V_2$, $V_3$ und $V_4$ unabhängig voneinander Wasserstoff; Niederalkyl; Cycloalkyl oder Benzyl; oder ($V_1$ und $V_2$) oder ($V_3$ und $V_4$) zusammen Alkylen bedeuten und

$X_1$ und $X_2$, unabhängig voneinander, je Wasserstoff; unsubstituiertes oder durch Halogen, Hydroxy, Cyano, Tetrahydrofuryl oder Niederalkoxy substituiertes Alkyl mit höchstens 12 Kohlenstoffatomen; Acyl mit 1 bis 8 Kohlenstoffatomen; Cycloalkyl mit 5 bis 10 Kohlenstoffatomen; oder unsubstituiertes oder durch Halogen, Cyano, Nitro, Trifluormethyl, Niederalkyl, Niederalkoxy, Niederalkoxycarbonyl, -NX'X" oder 4-X'X"N-phenylamino ringsubstituiertes Aralkyl oder Aryl, worin X' und X", unabhängig voneinander, Wasserstoff, Niederalkyl, Cyclohexyl, Benzyl oder Phenyl darstellen; oder ($X_1$ und $X_2$) zusammen mit dem gemeinsamen Stickstoffatom einen fünf- oder sechsgliedrigen, vorzugsweise gesättigten, heterocyclischen Rest bedeuten.

Besonders bevorzugt sind dabei Bis-Chinazolinverbindungen der Formel

(11) 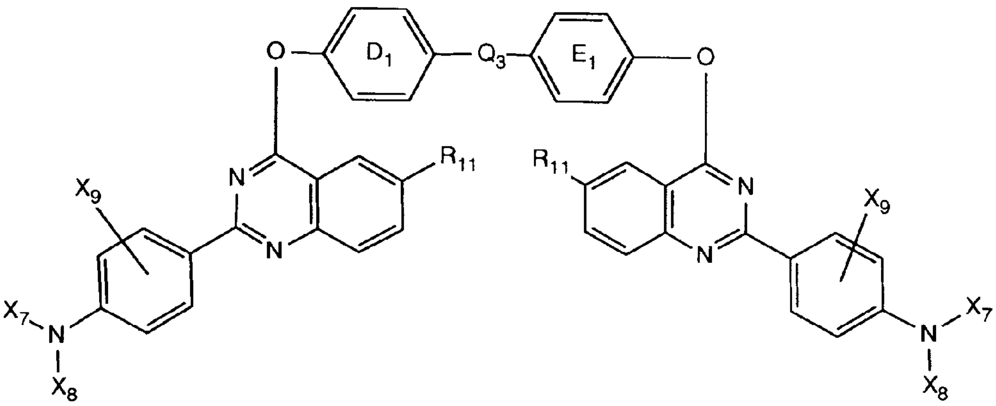 ,

worin

$Q_3$ geradkettiges oder verzweigtes Alkylen,
$X_7$ Niederalkyl; Benzyl; oder Phenyl,
$X_8$ Wasserstoff; Niederalkyl; oder Benzyl,
$X_9$ Wasserstoff; Methyl; Methoxy; oder Ethoxy,
$R_{11}$ Wasserstoff; Halogen; Methyl; oder Methoxy bedeuten und die Ringe $D_1$ und $E_1$ unsubstituiert oder durch einen oder zwei Substituenten, ausgewählt aus Methyl, Methoxy und tert.Butyl substituiert sind; bzw.

Bis-Chinazolinverbindung der Formel (12)

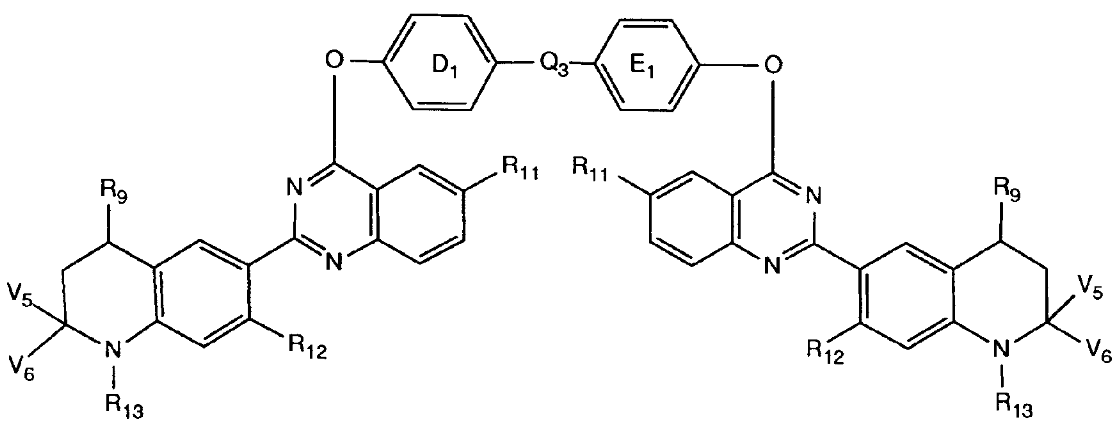

worin

$Q_3$ geradkettiges oder verzweigtes Alkylen mit je höchstens 4 Kohlenstoffatomen,
$R_9$, $V_5$ und $V_6$ je Niederalkyl;
$R_{11}$ Wasserstoff; Halogen; Methyl; oder Methoxy;
$R_{12}$ Wasserstoff; oder Methyl:
$R_{13}$ $C_1$-$C_8$-Alkyl; β-Cyanoethyl; oder Benzyl bedeuten; und die Ringe
$D_1$ und $E_1$ unsubstituiert oder durch einen oder zwei Substituenten ausgewählt aus Methyl, Methoxy und tert.Butyl substituiert sind.

Als Chinazolinverbindungen (Komponente ($d_2$)) kommen vorzugsweise Verbindungen der Formel

(13) 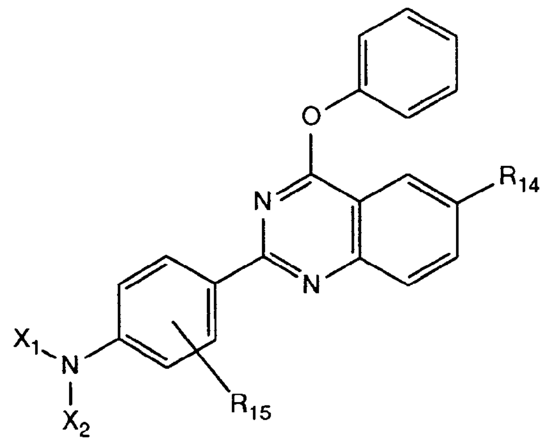

in Betracht, worin

$R_{14}$ Wasserstoff; Halogen; Methoxy; oder Methyl;

$R_{15}$ Wasserstoff; Methyl; Methoxy; oder Ethoxy bedeuten; und

$X_1$ und $X_2$, unabhängig voneinander, je Wasserstoff; unsubstituiertes oder durch Halogen, Hydroxy, Cyano, Tetrahydrofuryl oder Niederalkoxy substituiertes Alkyl mit höchstens 12 Kohlenstoffatomen; Acyl mit 1 bis 8 Kohlenstoffatomen; Cycloalkyl mit 5 bis 10 Kohlenstoffatomen; oder unsubstituiertes oder durch Halogen, Cyano, Nitro, Trifluormethyl, Niederalkyl, Niederalkoxy, Niederalkoxycarbonyl, -NX'X" oder 4-X'X"N-phenylamino ringsubstituiertes Aralkyl oder Aryl, worin X' und X", unabhängig voneinander, Wasserstoff, Niederalkyl, Cyclohexyl, Benzyl oder Phenyl darstellen; oder ($X_1$ und $X_2$) zusammen mit dem gemeinsamen Stickstoffatom einen fünf- oder sechsgliedrigen, vorzugsweise gesättigten, heterocyclischen Rest bedeuten.

Als Beispiel für eine Bis-Chinazolinverbindung (Komponente ($d_1$)) sei die Verbindung der Formel

(11a) 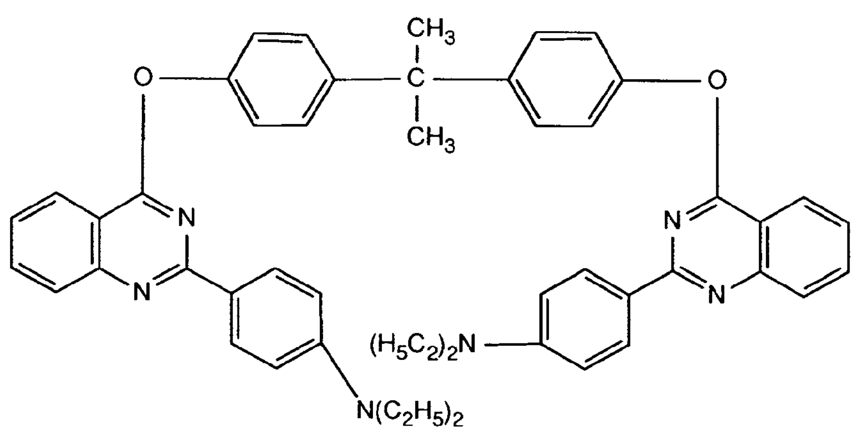

erwähnt.

Als Beispiel für Chinazolinverbindungen (Komponente ($d_2$)) sind die Verbindungen der Formeln

(13a) 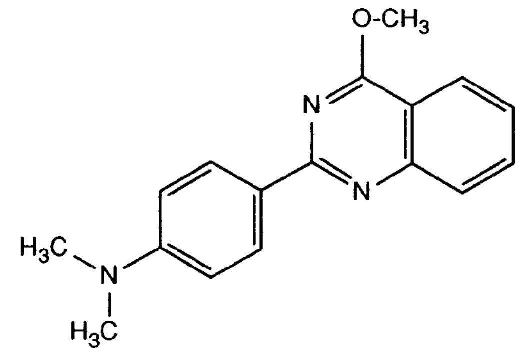 oder (13b)

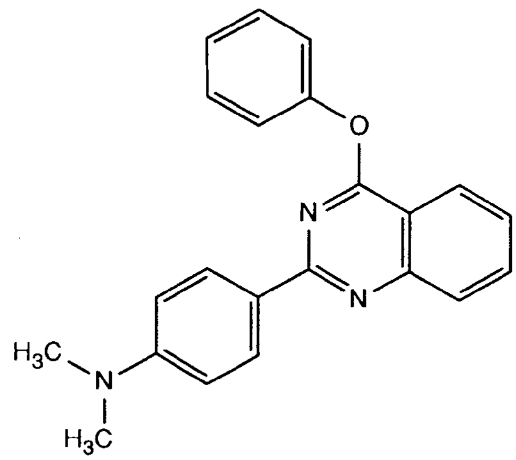

zu erwähnen.

Bei den Verbindungen der fakultativen Komponente (e) handelt es sich um chromogene Lactamverbindungen. Diese Verbindungen sowie ihre Herstellung sind z.B aus der EP-A-0,475,908 bekannt.

Für das erfindungsgemässe Farbbildner-Gemisch in Pastillenform wird vorzugsweise eine Lactamverbindung der Formel

(14) 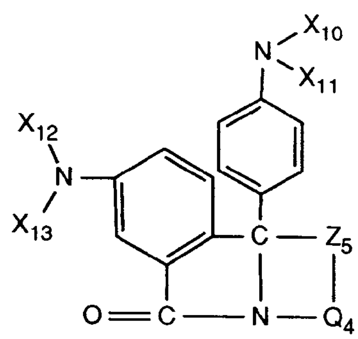

verwendet, worin

| | |
|---|---|
| $X_{10}$ und $X_{11}$ und $X_{12}$ und $X_{13}$ | gleiche oder voneinander verschiedene Niederalkyl- oder Phenylreste darstellen; oder |
| $X_{10}$ und $X_{11}$ | gemeinsam mit dem Stickstoffatom, an welches sie gebunden sind, Pyrrolidin; |
| $Q_4$ | $C_2$-$C_3$-Alkylen; 1,2-Cyclohexylen; 12-Phenylen; oder 1,8-Naphthylen; |
| $Z_5$ | -O-; -S-; oder $-NR_{16}$ ; |

und

$R_{16}$ Wasserstoff; Phenyl; Benzyl; $C_1$-$C_4$-Alkyl; Cyano-$C_1$-$C_4$-Alkyl; $C_1$-$C_4$-Alkylcarbonyl; N-$C_1$-$C_4$-Alkylcarbamoyl; oder gegebenenfalls durch Halogen, Nitro, Trifluormethyl, Niederalkyl oder Niederalkoxy substituiertes N-Phenylcarbamoyl;

bedeuten.

Ganz besonders bevorzugt sind Lactamverbindungen der Formel

(15) 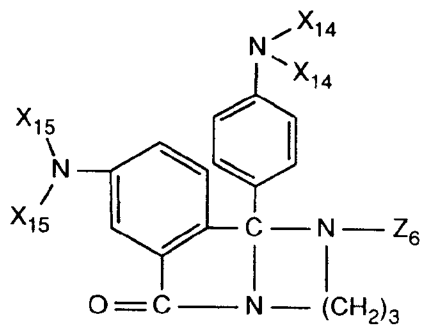 ,

worin

$X_{14}$ und $X_{15}$, unabhängig voneinander, $C_1$-$C_4$-Alkyl und

$Z_6$ Wasserstoff, Phenyl, Niederalkyl oder Cyano-Niederalkyl bedeuten.

Die folgenden Lactamverbindungen kommen als Komponente (e) für die erfindungsgemässen Farbbildnergemisch-Pastillen in Betracht:

(15a) 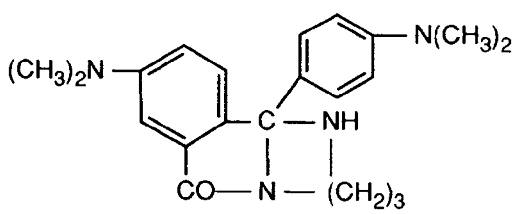 ;

(15b) 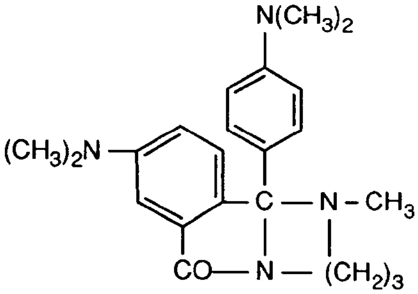 ; (15c) 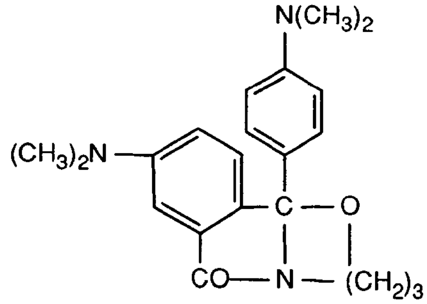 ;

(15d) 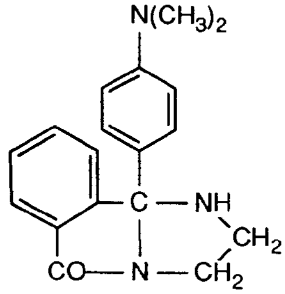 ; (15e) 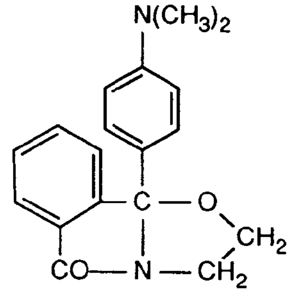 ;

(15f) 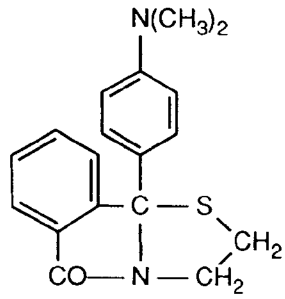 ;

(15g) 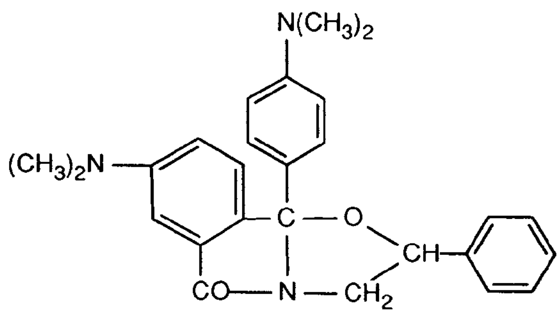 und(15h)

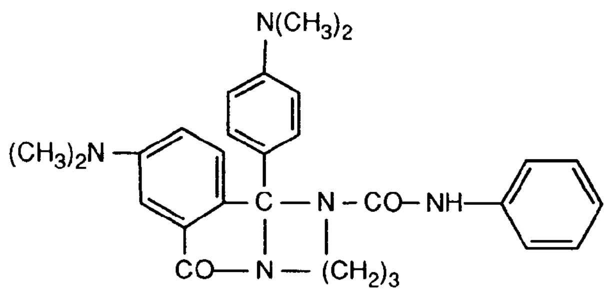 .

Bei den Verbindungen der fakultativen Komponente (f) handelt es sich um chromogene Oxazinverbindungen, die auch als Einzelverbindungen für Farbbildner Verwendung finden.

Für das erfindungsgemässe Farbbildnergemisch in Form von festen Pastillen kommen vorzugsweise Oxazinverbindungen der Formel (6) in Betracht, worin

$Z_1$-S- und

$Z_2$ -O- bedeuten und

$X_1$ und $X_2$, unabhängig voneinander, je Wasserstoff; unsubstituiertes oder durch Halogen, Hydroxy, Cyano, Tetrahydrofuryl oder Niederalkoxy substituiertes Alkyl mit höchstens 12 Kohlenstoffatomen; Acyl mit 1 bis 8 Kohlenstoffatomen; Cycloalkyl mit 5 bis 10 Kohlenstoffatomen; oder unsubstituiertes oder durch Halogen, Cyano, Nitro, Trifluormethyl, Niederalkyl, Niederalkoxy, Niederalkoxycarbonyl, -NX'X" oder 4-X'X"N-phenylamino ringsubstituiertes Aralkyl oder Aryl, worin X' und X", unabhängig voneinander, Wasserstoff, Niederalkyl, Cyclohexyl, Benzyl oder Phenyl darstellen; oder ($X_1$ und $X_2$) zusammen mit dem gemeinsamen Stickstoffatom einen fünf- oder sechsgliedrigen, vorzugsweise gesättigten, heterocyclischen Rest bedeuten.

Als Beispiel für eine solche Oxazinverbindung sei die Verbindung der Formel

(6a)

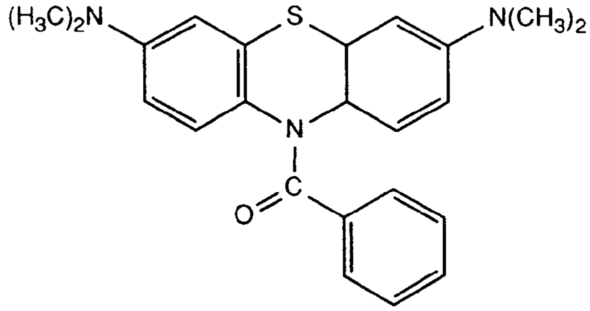

erwähnt.

Bei den Verbindungen der fakultativen Komponente (g) handelt es sich um chromogene 1,3-Oxazinverbindungen, die auch als Einzelverbindungen für Farbbildner Verwendung finden.

Für das erfindungsgemässe Farbbildnergemisch in Form von festen Pastillen kommen vorzugsweise 1,3-Benzoxazinverbindungen der Komponente (g) der Formel

(16)

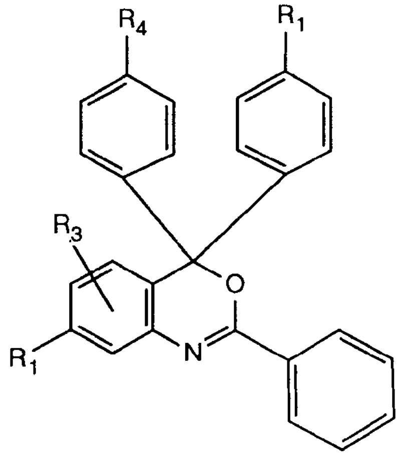

in Betracht, worin

$R_1$ einen Rest der Formel

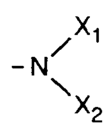 ;

$R_3$ Wasserstoff oder Niederalkyl; und

$R_4$ Wasserstoff; Niederalkyl; Niederalkoxy; Halogen; oder einen Rest der Formel

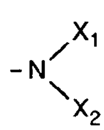

bedeuten; und

$X_1$ und $X_2$, unabhängig voneinander, je Wasserstoff; unsubstituiertes oder durch Halogen, Hydroxy, Cyano, Tetrahydrofuryl oder Niederalkoxy substituiertes Alkyl mit höchstens 12 Kohlenstoffatomen; Acyl mit 1 bis 8 Kohlenstoffatomen; Cycloalkyl mit 5 bis 10 Kohlenstoffatomen; oder unsubstituiertes oder durch Halogen, Cyano, Nitro, Trifluormethyl, Niederalkyl, Niederalkoxy, Niederalkoxycarbonyl, -NX'X" oder 4-X'X"N-phenylamino ringsubstituiertes Aralkyl oder Aryl, worin X' und X", unabhängig voneinander, Wasserstoff, Niederalkyl, Cyclohexyl, Benzyl oder Phenyl darstellen; oder ($X_1$ und $X_2$) zusammen mit dem gemeinsamen

Stickstoffatom einen fünf- oder sechsgliedrigen, vorzugsweise gesättigten, heterocyclischen Rest bedeuten.

Als Beispiel für eine erfindungsgemäss verwendete 1,3-Oxazinverbindung (Komponente (g)) ist die Verbindung der Formel

(16a)

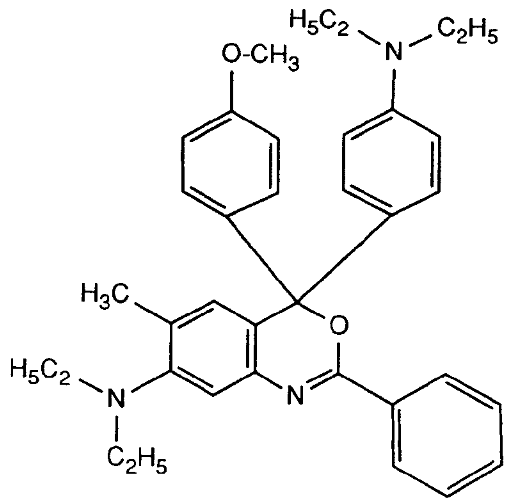

zu nennen.

Die Komponenten (a) bis (g) des erfindungsgemässen Farbbildnergemisches in Form von festen Pastillen können jeweils als Einzelverbindungen vorliegen oder mehrere Verbindungen aufweisen.

Vorzugsweise enthält die erfindungsgemässe Farbbildnergemisch-Pastille insgesamt mindestens 3 und höchstens 7 verschiedene der in den Komponenten (a) bis (g) aufgeführten Einzelverbindungen.

Das erfindungsgemässe Fabbildnergemisch in Form von festen Pastillen enthält, bezogen auf das Gesamtgewicht der Mischung,
10 bis 90 Gew.% der Komponente (a),
90 bis 10 Gew.% der Komponente (b),
0 bis 20 Gew.% der Komponente (c),
0 bis 30 Gew.% der Komponente (d),
0 bis 45 Gew.% der Komponente (e),
0 bis 75 Gew.% der Komponente (f) und
0 bis 10 Gew.% der Komponente (g).

Im Vordergrund des Interesses steht ein Gemisch, das
die Komponente (a) und
die Komponente (b) enthält.

Weiterhin bevorzugt ist ein Gemisch, das
die Komponente (a),
die Komponente (b),
die Komponente (c) und gegebenenfalls
die Komponente (e)
enthält.

Ganz besonders bevorzugt ist eine Farbbildnergemisch-Pastille, die als Komponente (a) 15 bis 30 Gew.% mindesetens einer Fluoranverbindung der Formel (1), worin
$R_1$ einen Rest der Formel

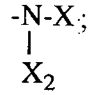

$X_1$, $X_2$ und $R_4$ unabhängig voneinander Niederalkyl und
$R_2$ Niederalkyl; Mononideralkylamino; Diniederalkylamino; Phenylamino; Diphenylamino; N-Phenylniederalkyl-N-niederalkylamino; N,N-Phenylniederalkylamino;oder einen Rest der Formel -(CO)X;

$R_3$ Wasserstoff oder Niederalkyl;
$R_5$ Wasserstoff; Halogen; Niederalkyl; $-NO_2$; einen Rest der Formel

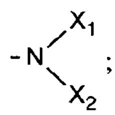

X Wasserstoff; Hydroxy; $C_1$-$C_8$-Alkyl; oder $C_1$-$C_8$-Alkoxy; und
$Z_1$, $Z_2$ und $Z_3$ -O-
bedeuten,
und als Komponente (b) 85 bis 15 Gew.% mindestens einer Phthalid-Verbindung der Formel (2), worin
$T_1$ und $T_2$ unabhängig voneinander einen Rest der Formel

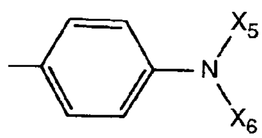

oder

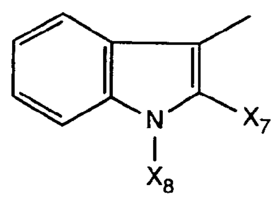

$X_5$, $X_6$, $X_7$ und $X_6$ unabhängig voneinander Wasserstoff oder $C_1$-$C_{12}$-Alkyl
$R_5$ Wasserstoff oder Niederalkyl,
$Z_1$ und $Z_2$ Sauerstoff bedeuten und
der Ring A nicht weiter substituiert ist,
als Komponente (c)
0 bis 25 Gew.% der Triarylmethanverbindung der Formel (9), worin
$X_1$ und $X_2$ die in Formel (6) angegebene Bedeutungen haben, und als Komponente (f)
0 bis 25 Gew.% der Oxazinverbindung der Formel (6), worin
$Z_1$ -S- und
$Z_2$ -O- bedeutet,
enthält.

Praktisch wichtige erfindungsgemässe Farbbildnergemisch-Pastillen bestehen ausschliesslich aus der Komponente (a) und der Komponente (b).

Eine weitere wichtige erfindungsgemässe Farbbildnergemisch-Pastille besteht ausschliesslich aus der Komponente (a), der Komponente (b) und der Komponente (c) oder aus der Komponente (a), der Komponente (b), der Komponente (c) und der Komponente (f).

Gemische, die aus den Komponenten (a) und (b) oder aus den Komponenten (a), (b) und (c) oder aus den Komponenten (a), (b), (c) und (f) bestehen, setzen sich insgesamt aus 4 bis 6 Einzelverbindungen zusammen.

Einen weiteren Erfindungsgegenstand stellt das Verfahren zur Herstellung des erfindungsgemässen Farbbildner-Gemisches in Form von festen Pastillen dar. Das Verfahren ist dadurch gekennzeichnet, dass man die pulverförmigen Einzelkomponenten (a), (b) und gegebenenfalls (c), (d), (e), (f) und (g) mischt, anschliessend die pulvrige Mischung bei einer Temperatur von 90 bis 250°C, gegebenenfalls unter Inertgas-Atmosphäre, wie z.B. Stickstoff oder Argon, zur Schmelze erhitzt und dann die Schmelze zur Pastillierung auf eine kalte Unterlage tropfen lässt.

Eine weitere Ausführungsform zur Herstellung des erfindungsgemässen Pastillengemisches besteht darin, dass man die pulverförmigen Einzelkomponenten (a), (b) und gegebenenfalls (c), (d) und (e), (f) und (g) in

einem organischen Lösungsmittel auflöst und danach bei erhöhter Temperatur, die über dem Siedepunkt des verwendeten Lösungsmittels liegt, das Lösungsmittel abdampft.

Die kalte Unterlage, auf die man das geschmolzene Farbbildnergemisch tropfen lässt, ist gewöhnlich ein Förderband mit einer ebenen Fläche, auf dem nach Verfestigung des geschmolzenen Farbbildnergemisches eine Pastille ausgebildet wird, die einen flachen, kreisrunden Boden und eine convex gekrümmte Oberseite hat, die verschiedene Krümmungsradien in der horizontalen und vertikalen Ebene aufweisen kann. Die Form einer solchen Pastille ist z.B. aus der oben schon erwähnten GB-A-2-239,872 ersichtlich.

Die Grösse der Pastille kann je nach der chemischen Struktur der jeweiligen Einzelverbindung variieren. Ausserdem kann die Grösse zum Beispiel durch die gewünschte Verdünnungsrate des Farbbildnergemisches in einem organischen Lösungsmittel bestimmt werden. Gewünschtenfalls kann der Durchmesser des flachen Pastillenbodens bis zu 15 mm erreichen. Gewöhnlich ist der Durchmesser allerdings kleiner als 10 mm, z.B. 1 bis 8 mm. Die Höhe der Pastille entspricht normalerweise dem Radius des flachen Pastillenbodens.

Das Förderband, auf das der Tropfen der geschmolzene Farbbildner-Mischung gebracht wird, ist z.B. ein sich bewegendes Endlosband, z.B. ein Stahlförderband, das nach Wunsch durch Besprühen der Innenflächen mit Wasser gekühlt werden kann.

Der Tropfen des geschmolzenen Farbbildnergemisches kann gewöhnlich dadurch ausgebildet werden, dass man das geschmolzene Farbbildnergemisch durch eine in einem Gefäss angebrachte Öffnung bringt, die vorzugsweise als Düse ausgebildet ist und zur Aufrechterhaltung des geschmolzenen Zustandes des Farbbildnergemisches z.B mit einem Heizdraht beheizt wird. In einer bevorzugten Ausführungsform befindet sich die Düse in der Aussenwand eines rotierenden zylinderförmigen Gefässes, das oberhalb des Förderbandes angebracht ist. Der Tropfen wird dadurch gebildet, dass man das geschmolzene Farbbildnergemisch von der Innenseite des Gefässes durch die Düse zur Aussenseite des Gefässes führt und den resultierenden Tropfen auf das Förderband bringt. In der Praxis wird man gewöhnlich eine Mehrzahl von Tropfen auf das Förderband bringen. Dies wird dadurch erreicht, dass man ein mit einer Vielzahl von Düsen ausgestattetes rotierendes Zylindergefäss verwendet.

Die Düsen, durch die das geschmolzene Farbbildnergemisch zur Bildung von Tropfen geführt wird, sind vorzugsweise rund. Die Grösse dieser Öffnungen wird im allgemeinen entsprechend der Pastillengrösse gewählt. Die Grösse der Pastillen wird auch durch den Druck bestimmt, der auf das geschmolzene Farbbildnergemisch ausgeübt wird. Zur Bestimmung der Pastillengrösse kann eine geeignete Kombination von Grösse der Öffnung und Druck durch einfaches Experimentieren herausgefunden werden. Im allgemeinen entspricht der Öffnungsdurchmesser einem Drittel bis der Häfte des gewünschten Pastillendurchmessers.

Eine geeignete Vorrichtung zur Bildung von Tropfen aus geschmolzenen Farbstoffen ist z.B. in der US-A-4,623,307 und der DE-PS-3,813756 beschrieben.

Die auf dem Förderband durch Abkühlung verfestigten Pastillen können von diesem direkt zur Verpackungsstation befördert werden.

Die vorliegende Erfindung kann auf alle Farbdbildnergemische angewendet werden, die einerseits einen Schmelzpunkt bis zu 300°C aufweisen und die in der Schmelze stabil sind.

Die erfindungsgemäss hergestellten Pastillen stellen Schwarz- oder Blaumischungen dar. Sie zeichnen sich durch eine ausgezeichnete Lagerstabilität aus und finden Verwendung als Farbbildner für druck- und wärmeempfindliche Aufzeichnungspapiere. Sie zeigen sowohl auf aktivierten Tonen, wie auch auf phenolischen Unterlagen eine ausgezeichnete Farbintensität und Lichtechtheit. Sie eignen sich vor allem als sich schnell entwickelnde Farbbildner für die Verwendung in einem wärmeempfindlichen oder insbesondere druckempfindlichen Aufzeichnungsmaterial, das sowohl Kopier- als auch Registriermaterial sein kann. Sie zeichnen sich durch eine gute Löslichkeit in den Kapselölen aus. Nach Belichtung im CB-Blatt weisen sie eine geringe Abnahme der Farbstärke (CB-Desaktivierung) auf.

Ein druckempfindliches Material besteht beispielsweise aus mindestens einem Paar von Blättern, die ein Gemisch von Farbbildnern in Pastillenform, gelöst in einem organischen Lösungsmittel und einen Elektronenakzeptor als Entwickler enthalten.

Typische Beispiele für solche Entwickler sind Aktivton-Substanzen, wie Attapulgus-Ton, Säureton, Bentonit, Montmorillonit, aktivierter Ton, wie z.B. säureaktiviertes Bentonit oder Montmorillonit, ferner Zeolith, Halloysit, Siliciumdioxid, Aluminiumoxid, Aluminiumsulfat, Aluminiumphosphat, Zinkchlorid, Zinknitrat, Zirkondioxid, aktiviertes Kaolin oder irgendein beliebiger Ton. Als Entwickler können auch sauer reagierende, organische Verbindungen, wie z.B. gegebenenfalls ringsubstituierte Phenole, Resorcine, Salicylsäuren, wie z.B. 3,5-Bis-($\alpha$,$\alpha$-dimethylbenzyl)-salicylsäure oder 3,5-Bis-($\alpha$-methylbenzyl)-salicylsäure oder Salicylsäureester und deren Metallsalze, z.B. Zinksalze, sowie ein sauer reagierendes, polymeres Material, wie z.B. ein phenolisches Polymerisat, ein Alkylphenolacetylenharz, ein Maleinsäure-Kolophonium-Harz oder ein teilweise oder vollständig hydrolysiertes Polymerisat von Maleinsäureanhydrid mit Styrol, Ethylen oder Vinylmethylether, oder Carboxymethylen verwendet werden. Es können auch Mischungen der genannten monomeren und polymeren Verbindungen eingesetzt werden. Besonders bevorzugte Entwickler sind säureaktiviertes Bentonit, Zinksalicylate oder die Kondensationsprodukte von p-substituierten Phenolen mit Formaldehyd. Die letzteren können auch mit Zink modifiziert sein. Die Zinksalicylate sind z.B. in der EP-A-0,181,283 oder DE-A-2,242,250 beschrieben.

Die Entwickler können zusätzlich auch im Gemisch mit an sich unreaktiven oder wenig reaktiven Pigmenten oder weiteren Hilfsstoffen wie Kieselgel oder UV-Absorbern, wie z.B. 2-(2'-Hydroxyphenyl-)benztriazolen eingesetzt werden. Beispiele für solche Pigmente sind: Talk, Titandioxid, Aluminiumoxid, Aluminiumhydroxid, Zinkoxid, Kreide, Tone wie Kaolin, sowie organische Pigmente, z.B. Harnstoff-Formaldehydkondensate (BET-Oberfläche 2-75 $m^2/g$) oder Melamin-Formaldehyd-Kondensationsprodukte.

Das Farbbildnergemisch liefert an den Punkten, an denen es mit dem Elektronenakzeptor in Kontakt kommt, eine gefärbte Markierung. Um eine frühzeitige Aktivierung des in dem druckempfindlichen Aufzeichnungsmaterial vorhandenen Farbbildnergemisches zu verhindern, wird dieses in der Regel von dem Elektronenakzeptor getrennt. Dies kann zweckmäßig erzielt werden, indem man das Farbbildnergemisch in schaum-, schwamm- oder bienenwabenartigen Strukturen einarbeitet. Vorzugsweise ist das Farbbildnergemisch in Mikrokapseln eingeschlossen, die sich in der Regel durch Druck zerbrechen lassen.

Beim Zerbrechen der Kapseln durch Druck, beispielsweise mittels eines Bleistiftes, wird die Farbbildnerlösung auf ein benachbartes, mit einem Elektronenakzeptor beschichtetes Blatt übertragen, wodurch eine farbige Stelle erzeugt wird. Die Farbe resultiert aus dem dabei gebildeten Farbstoff, der im sichtbaren Bereich des elektromagnetischen Spektrums absorbiert.

Das Farbbildnergemisch wird vorzugsweise in Form von Lösungen in organischen Lösungsmitteln eingekapselt. Beispiele für geeignete Lösungsmittel sind vorzugsweise nichtflüchtige Lösungsmittel, z.B. halogeniertes Paraffin, Benzol oder Diphenyl, wie Chlorparaffin, Trichlorbenzol, Monochlordiphenyl, Dichlordiphenyl oder Trichlordiphenyl, Ester wie z.B. Tricresylphosphat, Di-n-butylphthalat, Dioctylphthalat, Trichlorethylphosphat, aromatische Ether wie Benzylphenylether, Kohlenwasserstofföle, wie Paraffin oder Kerosin, aromatische Kohlenwasserstoffe, z.B. mit Isopropyl, Isobutyl, sek.Butyl oder tert.Butyl alkylierte Derivate von Diphenyl, Naphthalin oder Terphenyl, Dibenzyltoluol; partiell hydriertes Terphenyl, mono-, bis- oder tetra-$C_1$-$C_3$-alkylierte Diphenylalkane, Dodecylbenzol, benzylierte Xylole, Phenylxylylethan oder weitere chlorierte oder hydrierte, kondensierte, aromatische Kohlenwasserstoffe. Oft werden Mischungen verschiedener Lösungsmittel, insbesondere Mischungen aus Paraffinölen oder Kerosin und Diisopropylnaphthalin oder partiell hydriertem Terphenyl, eingesetzt, um eine optimale Löslichkeit für die Farbbildung, eine rasche und intensive Färbung und eine für die Mikroverkapselung günstige Viskosität zu erreichen.

Die Kapselwände können durch Koazervationskräfte gleichmäßig um die Tröpfchen der Farbbildnergemisch-Lösung herum gebildet werden, wobei das Einkapselungsmaterial z.B. in der US-Patentschrift 2,800,457 beschrieben ist. Die Kapseln können vorzugsweise auch aus einem Aminoplast oder modifizierten Aminoplasten durch Polykondensation gebildet werden, wie es in den britischen Patentschriften 989,264, 1,156,725, 1,301,052 und 1,355,124 beschrieben ist. Ebenfalls geeignet sind Mikrokapseln, welche durch Grenzflächenpolymerisation gebildet werden, wie z.B. Kapseln aus Polyester, Polycarbonat, Polysulfonamid, Polysulfonat, besonders aber aus Polyamid oder Polyurethan.

Mikrokapseln, die die gelöste Farbbildnergemisch-Pastille enthalten, können zur Herstellung von druckempfindlichen Kopiermaterialien der verschiedensten bekannten Arten verwendet werden. Die verschiedenen Systeme unterscheiden sich im wesentlichen voneinander durch die Anordnung der Kapseln, der Farbreaktanten und durch das Trägermaterial.

Bevorzugt wird eine Anordnung, bei der das eingekapselte Farbbildnergemisch in Form einer Schicht auf der Rückseite eines Übertragungsblattes und der Elektronenakzeptor (Farbentwickler) in Form einer Schicht auf der Vorderseite eines Empfangsblattes vorhanden sind. Eine andere Anordnung der Bestandteile besteht darin, dass die den Farbbildner enthaltenden Mikrokapseln und der Entwickler in oder auf dem gleichen Blatt in Form einer oder mehrerer Einzelschichten vorliegen oder der Entwickler im Trägermaterial eingebaut ist.

Die Kapseln werden vorzugsweise mittels eines geeigneten Binders auf dem Träger befestigt. Da Papier das bevorzugte Trägermaterial ist, handelt es sich bei diesem Binder hauptsächlich um Papierbeschichtungsmittel wie Gummi arabicum, Polyvinylalkohol, Hydroxymethylcellulose, Casein, Methylcellulose, Dextrin, Stärke, Stärkederivate oder Polymerlatices. Letztere sind beispielsweise Butadien-Styrolcopolymerisate oder Acrylhomo- oder -copolymere.

Als Papier werden nicht nur normale Papiere aus Cellulosefasern, sondern auch Papiere, in denen die Cellulosefasern (teilweise oder vollständig) durch Fasern aus synthetischen Polymerisaten ersetzt sind, verwendet. Schichtträger kann auch eine Kunststoffolie sein.

Vorzugsweise weist das Durchschreibematerial auch eine kapselfreie, das Farbbildnergemisch enthaltende Schicht und eine farbentwickelnde Schicht auf, die als Farbentwickler mindestens ein anorganisches Metallsalz eines mehrwertigen Metalls, vor allem Halogenide oder Nitrate, wie z.B. Zinkchlorid, Zinnchlorid, Zinknitrat oder deren Gemische enthält.

Die erfindungsgemässe Farbbildnergemisch-Pastille kann auch in einem thermoreaktiven Aufzeichnungsmaterial verwendet werden. Dieses enthält in der Regel mindestens einen Schichtträger, das Farbbildnergemisch, einen Elektronenakzeptor und gegebenenfalls auch ein Bindemittel und/oder Wachs. Gewünschtenfalls können auch Aktivatoren oder Sensibilisatoren im Aufzeichnungsmaterial vorhanden sein.

Thermoreaktive Aufzeichnungssysteme umfassen, z.B. wärmeempfindliche Aufzeichnungs- und Kopiermaterialien und -papiere. Diese Systeme werden beispielsweise zum Aufzeichnen von Informationen, z.B. in elektronischen Rechnern, Ferndruckern, Fernschreibern oder in Aufzeichnungsgeräten und Messinstrumenten, wie z.B. Elektrocardiographen, verwendet. Die Bilderzeugung (Markierung) kann auch manuell mit einer erhitzten Feder erfolgen. Eine weitere Einrichtung zur Erzeugung von Markierungen mittels Wärme sind Laserstrahlen.

Das thermoreaktive Aufzeichnungsmaterial kann so aufgebaut sein, dass das Farbbildnergemisch in einer Bindemittelschicht gelöst oder dispergiert ist und in einer zweiten Schicht der Entwickler in dem Bindemittel gelöst und dispergiert ist. Eine andere Möglichkeit besteht darin, dass sowohl das Farbbildnergemisch als auch der Entwickler in einer Schicht dispergiert sind. Die Schicht bzw. Schichten werden in spezifischen Bereichen mittels Wärme erweicht, worauf sich sofort in den erwärmten Teilen die erwünschte Farbe entwickelt.

Als Entwickler eignen sich die gleichen Elektronenakzeptoren wie sie in druckempfindlichen Papieren verwendet werden. Beispiele für Entwickler sind die bereits erwähnten Tonminerale und Phenolharze oder auch phenolische Verbindungen, wie sie beispielsweise in der DE-PS-1,251,348 beschrieben sind, z.B. 4-tert.-Butylphenol, 4-Phenylphenol, Methylen-bis-(p-phenylphenol), 4-Hydroxydiphenylether, α-Naphthol, β-Naphthol, 4-Hydroxybenzoesäuremethyl- oder -benzylester, 4-Hydroxydiphenylsulfon, 4'-Hydroxy-4-methyldiphenylsulfon, 4'-Hydroxy-4-isopropoxydiphenylsulfon, 4,4'-Cyclo-hexylidendiphenol, 4,4'-Isopropylidendiphenol, 4,4'-Isopropyliden-bis-(2-methylphenol), ein Antipyrinkomplex von Zinkthiocyanat, ein Pyridinkomplex von Zinkthiocyanat, 4,4-Bis(4-hydroxyphenyl)valeriansäure, Hydrochinon, Pyrogallol, Phloroglucin, p-, m-, o-Hydroxybenzoesäure, Hydroxyphthalsäure, Gallussäure, 1-Hydroxy-2-naphthoesäure sowie Borsäure oder organische, vorzugsweise aliphatische Dicarbonsäuren, wie z.B. Weinsäure, Oxalsäure, Maleinsäure, Zitronensäure, Citraconsäure oder Bernsteinsäure.

Vorzugsweise werden zur Herstellung des thermoreaktiven Aufzeichnungsmaterials schmelzbare, filmbildende Bindemittel verwendet. Diese Bindemittel sind normalerweise wasserlöslich, während die Farbbildner und der Entwickler in Wasser schwer löslich oder unlöslich sind. Das Bindemittel sollte in der Lage sein, den Farbbildner und den Entwickler bei Raumtemperatur zu dispergieren und zu fixieren.

Bei Einwirkung von Wärme erweicht oder schmilzt das Bindemittel, so dass dsa Farbbildnergemisch mit dem Entwickler in Kontakt kommt und sich eine Farbe bilden kann. Wasserlösliche oder mindestens in Wasser quellbare Bindemittel sind z.B. hydrophile Polymerisate, wie Polyvinylalkohol, Polyacrylsäure, Hydroxyethylcellulose, Methylcellulose, Carboxymethylcellulose, Polyacrylamid, Polyvinylpyrrolidon, Gelatine, Stärke oder veretherte Maisstärke.

Wenn das Farbbildnergemisch und der Entwickler in zwei getrennten Schichten vorliegen, können in Wasser unlösliche Bindemittel, d.h. in nichtpolaren oder nur schwach polaren Lösungsmitteln lösliche Bindemittel, wie z.B. Naturkautschuk, synthetischer Kautschuk, chlorierter Kautschuk, Alkydharze, Polystyrol, Styrol/Butadien-Mischpolymerisate, Polymethylacrylate, Ethylcellulose, Nitrocellulose und Polyvinylcarbazol verwendet werden. Die bevorzugte Anordnung ist jedoch diejenige, bei der das Farbbildnergemisch und der Entwickler in einer Schicht in einem wasserlöslichen Bindemittel enthalten sind.

Um die Stabilität des wärmeempfindlichen Aufzeichnungsmaterials oder die Bilddichte des entwickelten Bildes zu gewährleisten, kann das Material mit einer zusätzlichen Schutzschicht versehen sein. Derartige Schutzschichten bestehen in der Regel aus wasserlöslichen und/oder wasserunlöslichen Harzen, die herkömmliche Polymermaterialien oder wässrige Emulsionen von diesen Polymermaterialien sind.

Die thermoreaktiven Schichten und Harzschichten können weitere Zusätze enthalten. Zur Verbesserung des Weissgrades, zur Erleichterung des Bedruckens der Papiere und zur Verhinderung des Festklebens der erhitzten Feder können diese Schichten z.B. Talk, Titandioxid, Zinkoxid, Aluminiumhydroxid, Calciumcarbonat (z.B. Kreide), Tone oder auch organische Pigmente, wie z.B. Harnstoff-Formaldehydpolymerisate enthalten. Um die Farbbildung nur innerhalb eines begrenzten Temperaturbereiches zu bewirken, können Substanzen wie Harnstoff, Thioharnstoff, Diphenylthioharnstoff, Acetamid, Acetanilid, Benzolsulfanilid, Stearinsäureamid, Bisstearoylethylendiamid, Phthalsäureanhydrid, Metallstearate, wie z.B. Zinkstearat, Phthalsäurenitril, Dimethylterephthalat, Dibenzyltherephthalat oder andere entsprechende, schmelzbare Produkte, welche das gleichzeitige Schmelzen des Farbbildners und des Entwicklers induzieren, zugesetzt werden. Bevorzugt enthalten thermographische Aufzeichnungsmaterialien Wachse, z.B. Carnaubawachs, Montanwachs, Paraffinwachs, Polyethylenwachs, Kondensate höherer Fettsäureamide und Formaldehyde und Kondensate höherer Fettsäuren und Ethylendiamin.

Eine weitere Anwendung der erfindungsgemässen Farbbildnergemisch-Pastille ist die Herstellung eines Farbbildes mittels photohärtbaren Mikrokapseln, wie sie z.B. in der DE-A-3,247,488 beschrieben sind.

Die folgenden Beispiele erläutern die Erfindung. Die angegebenen Prozentsätze beziehen sich, wenn nichts anderes angegeben ist, auf das Gewicht.

Beispiel 1:

A. Mischen der Einzelkomponenten (für einen 300g-Ansatz)

In einem 500 ml Becherglas werden die folgenden pulvrigen Farbbildner mit einem Löffel zusammengemischt

| | |
|---|---|
| 96 g | der Verbindung der Formel (8d) |
| 51 g | der Verbindung der Formel (9d) |
| 48 g | der Verbindung der Formel (10a) |
| 42 g | der Verbindung der Formel (8e) |
| 36 g | der Verbindung der Formel (9a) |
| 18 g | der Verbindung der Formel (11a) |
| 9 g | der Verbindung der Formel (8a) |

B. Schmelze der pulvrigen Mischung

Die in A. hergestellte Pulvermischung wird in einem 500 ml-Doppelmanteltropftrichter eingegetragen und unter Stickstoff auf 160°C aufgeheizt und geschmolzen.

C. Pastillierung

Die dunkelgrüne Schmelze wird dann unter folgenden Bedingungen auf ein kalte Stahldrehwalze getropft:

- Abflussmenge: 2-3 Tropfen/Sekunde
- Geschwindigkeit der Drehwalze: 4 Umdrehungen/Minute

Nach 10 Minuten Pastillierungslaufzeit wird die Drehwalze auf der Innenseite mit kaltem Wasser gekühlt.

Nach Abkühlung und Verfestigung auf der Drehwalze werden die festen Pastillen abgeschabt und in einem Container unter der Drehwalze gesammelt.

Die durchsichtigen Pastillen haben einen Durchmesser von 5 mm.

Beispiele 2 bis 17:

Man verfährt wie in Beispiel 1 beschrieben unter Verwendung der folgenden Einzelkomponenten und Angabe der Gewichtsprozente (Tabelle 3):

Tabelle 3:

| Verb. d. Formel | Beispiel 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|
| (8d) | | | 32 | 25 | 30 | | 15 | | | 50 | | 27 | | | 30 | 29 |
| (8f) | | | | 29 | | | | 10 | | | 40 | | 35 | | | |
| (9c) | | | | 20 | | | | | | | | | | | | 14 |
| (10a) | 14 | 18 | 16 | | 17 | 13 | | 25 | 25 | | 18 | 16 | 11 | 13 | 17 | 19 |
| (9d) | 16 | 27 | 17 | | 14 | | 80 | 55 | 55 | 8 | 12 | 13 | | | 14 | |
| (8e) | 48 | 12 | 14 | 13 | | | | | | 26 | 12 | | | | | 24 |
| (9a) | 3 | 16 | 12 | | | | 5 | 10 | 10 | 6 | 8 | | | | | 8 |
| (8a) | 15 | | 3 | | | 13 | | | | 10 | | | | | | |
| (8g) | | | | 13 | 15 | | | | | | 10 | 17 | 11 | 13 | 15 | |
| (11a) | | 27 | 6 | | | | | | | | | | | | | 6 |
| (16a) | | | | | 24 | 74 | | | | | | 12 | 43 | 74 | | |
| (6a) | 4 | | | | | | | | | | | | | | | |
| (8b) | | | | | | | | | 10 | | | | | | | |
| (8h) | | | | | | | | | | | | | | | 24 | |

**Patentansprüche**

1. Gemisch aus Farbbildnern in Pastillenform, enthaltend
(a) mindestens eine Fluoranverbindung der Formel

(1) 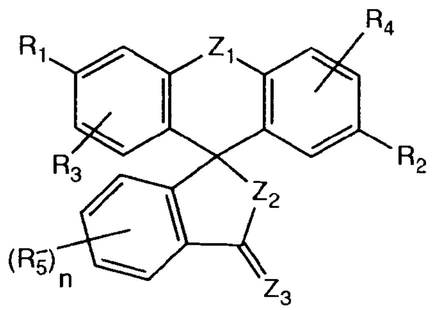 ,

(b) mindestens ein Phthalid der Formel

(2) 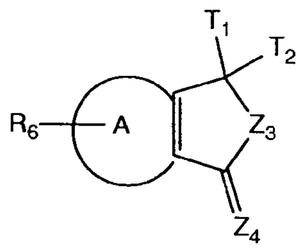 ,

und gegebenenfalls
(c) mindestens eine Triarylmethanverbindung der Formel

(3) 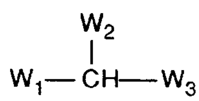

($d_1$) mindestens eine Bis-Chinazolinverbindung der Formel

(4a) 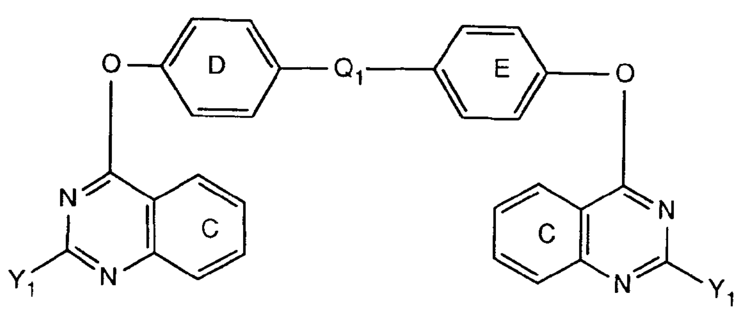

oder ($d_2$) eine Chinazolinverbindung der Formel

(4b)

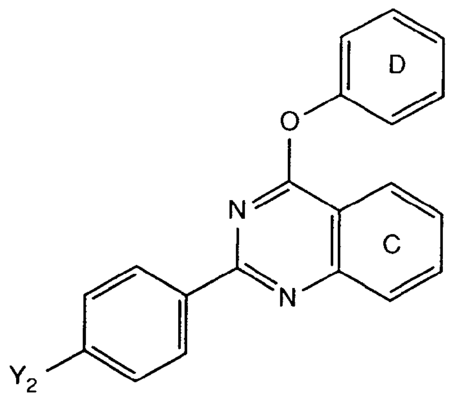

,

(e) mindestens eine Lactamverbindung der Formel

(5)

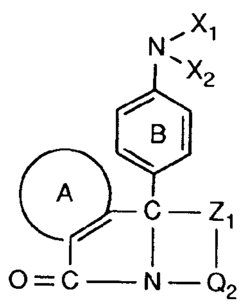

(f) mindestens eine Oxazinverbindung der Formel

(6)

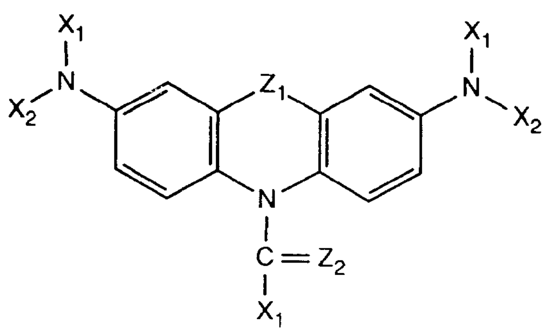

oder

(g) mindestens eine 1,3-Benzoxazinverbindung der Formel

(7) 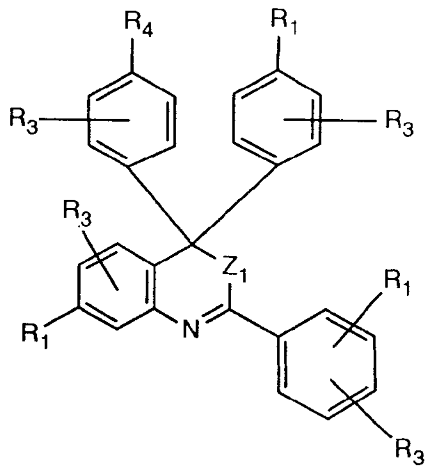

worin

$R_1$ einen Rest der Formel

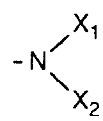 ;

$R_2$ Wasserstoff; Niederalkyl; -(CO)X; einen Rest der Formel

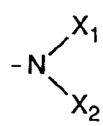 ;

$R_3$ Wasserstoff; oder Niederalkyl;

$R_4$ Wasserstoff; Niederalkyl; Halogen; einen Rest der Formel

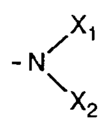 ;

-O-X;

$R_5$ und $R_5$ unabhängig voneinander Wasserstoff; Halogen; Niederalkvl: $-NO_2$; einen Rest der Formel

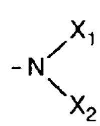 ;

$Q_1$ die direkte Bindung; einen aliphatischen, cycloaliphatischen oder aromatischen Kohlenwasserstoffrest; Arylalkylen; -CO-; -S-; oder-$SO_2$-;

$Q_2$ $C_1$-$C_{12}$-Alkylen, Aryl-$C_1$-$C_4$-Alkylen, 1,2-Cycloalkylen, 1,2- oder 1,8-Arylen oder Aralkylen;

$T_1$und $T_2$ unabhängig voneinander einen Rest der Formel

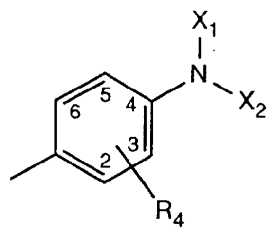

oder

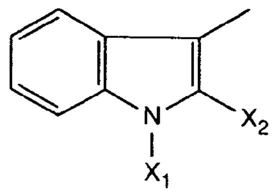

$W_1$, $W_2$ und $W_3$ unabhängig voneinander einen Rest der Formel

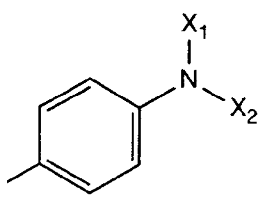

oder

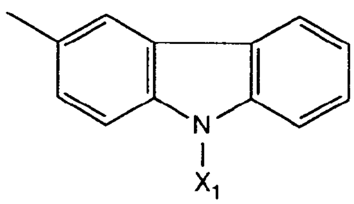

;

$X_1$ und $X_2$, unabhängig voneinander, je Wasserstoff; unsubstituiertes oder durch Halogen, Hydroxy, Cyano, Tetrahydrofuryl oder Niederalkoxy substituiertes Alkyl mit höchstens 12 Kohlenstoffatomen; Acyl mit 1 bis 8 Kohlenstoffatomen; Cycloalkyl mit 5 bis 10 Kohlenstoffatomen; oder unsubstituiertes oder durch Halogen, Cyano, Nitro, Trifluormethyl, Niederalkyl, Niederalkoxy, Niederalkoxycarbonyl, -NX'X" oder 4-X'X"N-phenylamino ringsubstituiertes Aralkyl oder Aryl, worin X' und X", unabhängig voneinander, Wasserstoff, Niederalkyl, Cyclohexyl, Benzyl oder Phenyl darstellen; oder ($X_1$ und $X_2$) zusammen mit dem gemeinsamen Stickstoffatom einen fünf- oder sechsgliedrigen, vorzugsweise gesättigten, heterocyclischen Rest bedeuten.

n eine ganze Zahl von 1 bis 4,

X Wasserstoff; Hydroxy; $C_1$-$C_8$-Alkyl; $C_1$-$C_8$-Alkoxy; $C_1$-$C_8$-Halogenalkyl; unsubstituiertes oder im Phenylrest durch Halogen, $C_1$-$C_4$-Alkyl, $C_1$-$C_4$-Halogenalkyl, $C_1$-$C_4$-Alkoxy substituiertes Phenyl; Phenyl-$C_1$-$C_4$-Alkyl oder Phenyl-$C_1$-$C_4$-Alkoxy;

$Y_1$ und $Y_2$, unabhängig voneinander, den Rest einer kupplungsfähigen Verbindung;

| | |
|---|---|
| $Z_1$, $Z_2$, $Z_3$ und $Z_4$, | unabhängig voneinander $-NX_1$; |
| | O oder S; |
| und | |
| der Ring A | einen aromatischen oder heteroaromatischen Rest mit 6 Ringatomen, der einen aromatischen annellierten Ring aufweisen kann, wobei sowohl der Ring A als auch der annellierte Ring substituiert sein können; |
| der Ring B | einen unsubstituierten oder durch Halogen, Niederalkyl, $C_1$-$C_{12}$-Alkoxy, Benzyloxy, Niederalkylcarbonylamino, Mono- oder Diniederalkylamino substituierten Benzolkern; und |
| die Ringe C, D und E | unsubstituiert oder durch Cyano, Nitro, Halogen, Niederalkyl, Phenyl, Benzyl, Niederalkoxy oder Niederalkoxycarbonyl substituiert sind. |

2. Gemisch nach Anspruch 1, dadurch gekennzeichnet, dass die Komponente a) der Formel

(8) 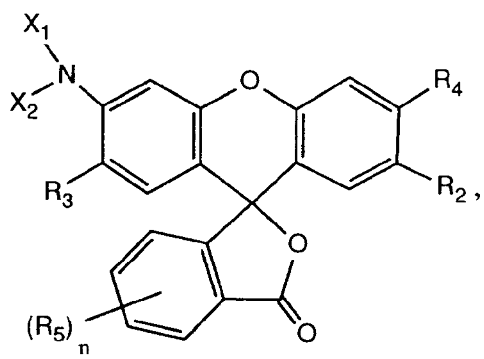

entspricht, worin
$X_1$ und $X_2$, $R_2$, $R_3$, $R_4$, $R_5$ und n die in Formel (1) angegebene Bedeutung haben.

3. Gemisch nach Anspruch 2, dadurch gekennzeichnet, dass in Formel (8) $X_1$ und $X_2$ unabhängig voneinander $C_1$-$C_{12}$-Alkyl oder Phenyl bedeuten.

4. Gemisch nach Anspruch 3, dadurch gekennzeichnet, dass in Formel (8)
$X_1$, $X_2$ und $R_4$ unabhängig voneinander Niederalkyl und
$R_2$ Niederalkyl; Mononideralkylamino; Diniederalkylamino; Phenylamino; Diphenylamino; N-Phenylniederalkyl-N-niederalkylamino; N,N-Phenylniederalkylamino;oder einen Rest der Formel -(CO)X;
$R_3$ Wasserstoff oder Niederalkyl;
X Wasserstoff; Hydroxy; $C_1$-$C_8$-Alkyl; oder $C_1$-$C_8$-Alkoxy; bedeuten.

5. Gemisch nach Anspruch 1, dadurch gekennzeichnet, dass die Phthalidverbindung der Komponente (b) der Formel

(9) 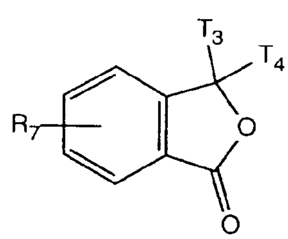

entspricht,
worin
$T_3$ und $T_4$ unabhängig voneinander einen Rest der Formel

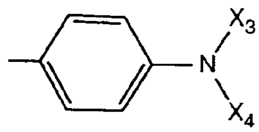

oder

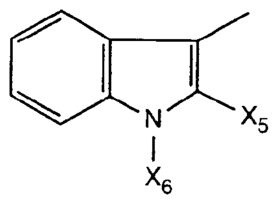

$X_3$, $X_4$, $X_5$ und $X_5$ unabhängig voneinander Wasserstoff oder $C_1$-$C_{12}$-Alkyl; und
$R_7$ Wasserstoff, Niederalkyl oder Niederalkylamino bedeuten.

**6.** Gemisch nach Anspruch 1, dadurch gekennzeichnet, dass die Triarylmethanverbindung entsprechend Komponente (c) der Formel

(10) 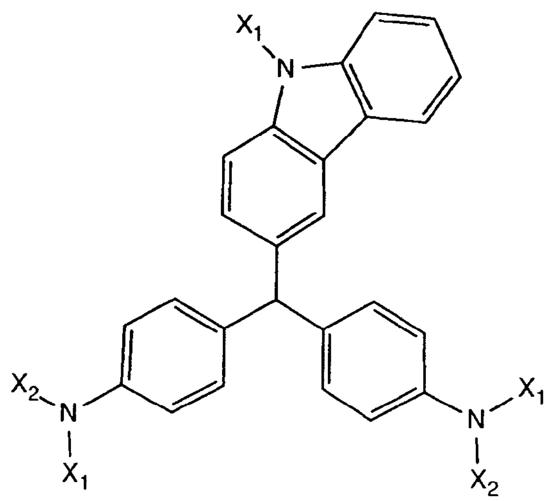

entspricht, worin
$X_1$ und $X_2$ die in Anspruch 1 angegebene Bedeutung haben.

**7.** Gemisch nach Anspruch 1, dadurch gekennzeichnet, dass die Bis-Chinazolinverbindung der Komponente ($d_1$) der Formel (4a) entspricht,
worin
$Y_1$ einen Aminophenylrest der Formel

(4c) 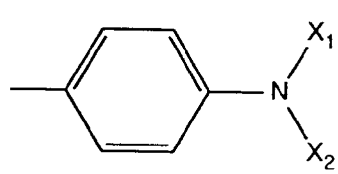 ;

einen Tetrahydrochinolinylrest der Formel

(4d) 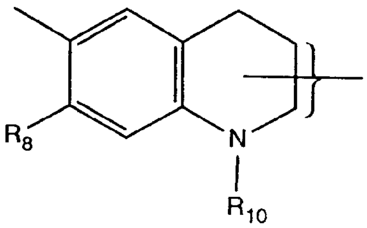 oder (4e) 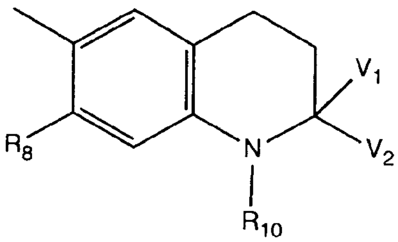 ;

einen Benzomorpholinorest der Formel

(4f) 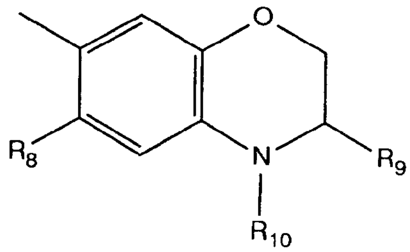 ;

oder einen 5-Indolinrest der Formel

(4g) 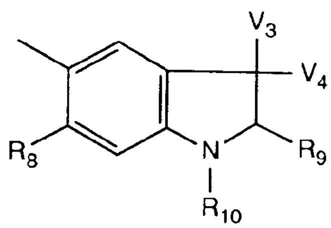

bedeuten, wobei

| | |
|---|---|
| $R_8$ | Wasserstoff; Halogen; Niederalkyl; Niederalkoxy; $C_1$-$C_4$-Acylamino; oder Phenyl |
| $R_9$ | Wasserstoff; Halogen; Hydroxy; Niederalkyl;oder Niederalkoxy, |
| $R_{10}$ | Wasserstoff; $C_1$-$C_8$-Alkyl; $C_2$-$C_6$-Alkoxyalkyl; β-Cyanoethyl; oder Benzyl; |
| $V_1$, $V_2$, $V_3$ und $V_4$ | unabhängig voneinander Wasserstoff; Niederalkyl; Cycloalkyl oder Benzyl; oder ($V_1$ und $V_2$) oder ($V_3$ und $V_4$) zusammen Alkylen bedeuten und |
| $X_1$ und $X_2$ | die in Anspruch 1 angegebene Bedeutung haben. |

**8.** Gemisch nach Anspruch 7, dadurch gekennzeichnet, dass die Bis-Chinazolinverbindung entsprechend Komponente ($d_1$) der Formel

(10) 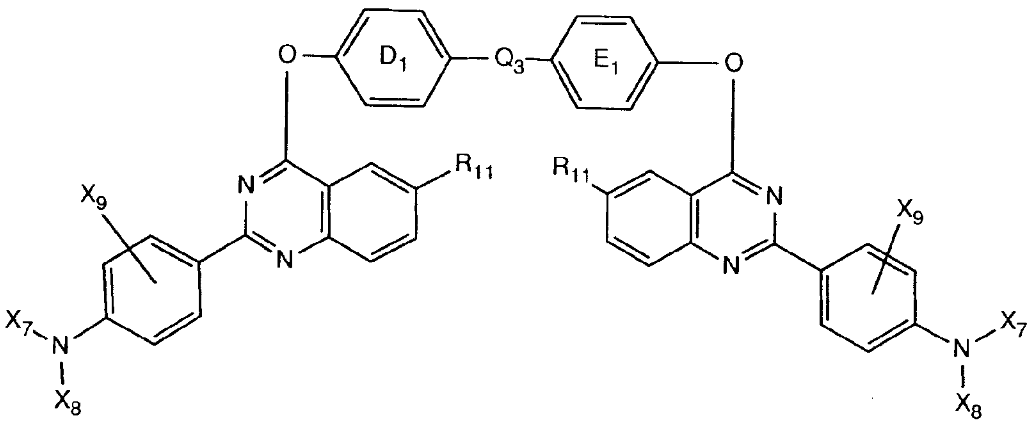

entspricht, worin

| | |
|---|---|
| $Q_3$ | geradkettiges oder verzweigtes Alkylen, |
| $X_7$ | Niederalkyl; Benzyl; oder Phenyl, |
| $X_8$ | Wasserstoff; Niederalkyl; oder Benzyl, |
| $X_9$ | Wasserstoff; Methyl; Methoxy; oder Ethoxy, |
| $R_{11}$ | Wasserstoff; Halogen; Methyl; oder Methoxy bedeuten und |
| die Ringe $D_1$ und $E_1$ | unsubstituiert oder durch einen oder zwei Substituenten, ausgewählt aus Methyl, Methoxy und tert.Butyl substituiert sind. |

**9.** Gemisch nach Anspruch 7, dadurch gekennzeichnet, dass die Bis-Chinazolinverbindung der Komponente ($d_1$) der Formel (12)

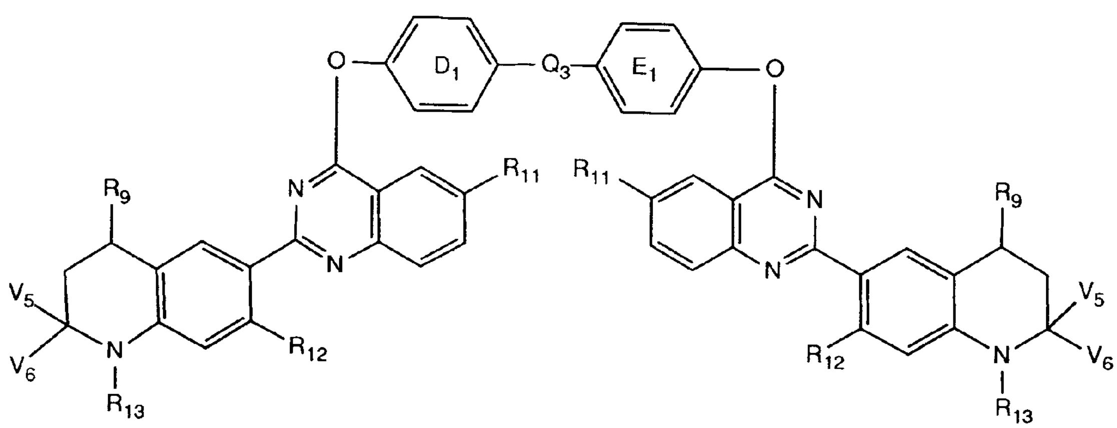

entspricht, worin

| | |
|---|---|
| $Q_3$ | geradkettiges oder verzweigtes Alkylen mit je höchstns 4 Kohlenstoffatomen, |
| $R_9$, $V_5$ und $V_6$ | je Niederalkyl; |
| $R_{11}$ | Wasserstoff; Halogen; Methyl; oder Methoxy: |
| $R_{12}$ | Wasserstoff; oder Methyl: |
| $R_{13}$ | $C_1$-$C_8$-Alkyl; β-Cyanoethyl; oder Benzyl bedeuten; und die Ringe |
| $D_1$ und $E_1$ | unsubstituiert oder durch einen oder zwei Substituenten ausgewählt aus Methyl, Methoxy und tert.Butyl substituiert sind. |

**10.** Gemisch nach Anspruch 1, dadurch gekennzeichnet, dass die Chinazolinverbindung der Komponente ($d_2$) der Formel

(13) 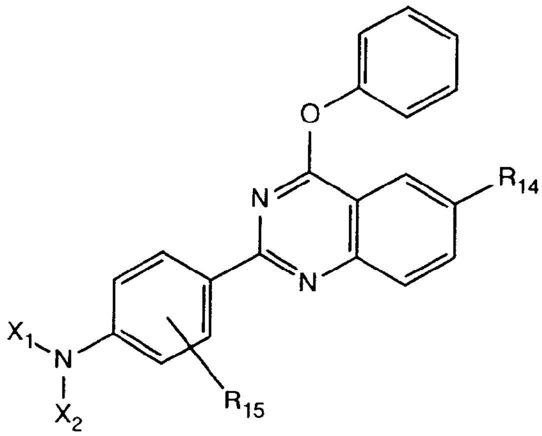

entspricht, worin

| | |
|---|---|
| $R_{14}$ | Wasserstoff; Halogen; Methoxy; oder Methyl; |
| $R_{15}$ | Wasserstoff; Methyl; Methoxy; oder Ethoxy bedeuten; und |
| $X_1$ und $X_2$ | die in Anspruch 1 angegebene Bedeutung haben. |

**11.** Gemisch nach Anspruch 1, dadurch gekennzeichnet, dass der Farbbildner der Komponente (e) der Formel

(14) 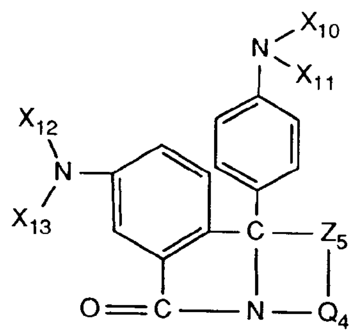

entspricht, worin

| | |
|---|---|
| $X_{10}$ und $X_{11}$ und $X_{12}$ und $X_{13}$ | gleiche oder voneinander verschiedene Niederalkyl- oder Phenylreste darstellen; oder |
| $X_{10}$ und $X_{11}$ | gemeinsam mit dem Stickstoffatom, an welches sie gebunden sind, Pyrrolidin; |
| $Q_4$ | $C_2$-$C_3$-Alkylen; 1,2-Cyclohexylen; 1,2-Phenylen; oder 1,8-Naphthylen; |
| $Z_5$ | -O-; -S-; oder $-NR_{16}$ ; und |
| $R_{16}$ | Wasserstoff; Phenyl; Benzyl; $C_1$-$C_4$-Alkyl; Cyano-$C_1$-$C_4$-Alkyl; $C_1$-$C_4$-Alkylcarbonyl; N-$C_1$-$C_4$-Alkylcarbamoyl; oder gegebenenfalls durch Halogen, Nitro, Trifluormethyl, Niederalkyl oder Niederalkoxy substituiertes N-Phenylcarbamoyl; |

bedeuten.

**12.** Gemisch nach Anspruch 11, dadurch gekennzeichnet, dass der Farbbildner der Komponente (e) der Formel

(15) 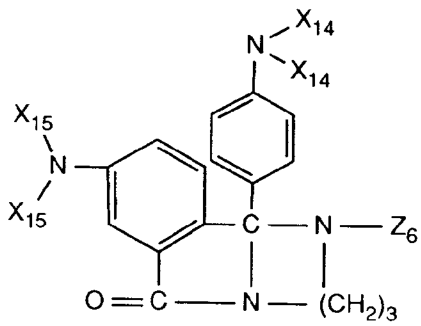

entspricht, worin
$X_{14}$ und $X_{15}$, unabhängig voneinander, $C_1$-$C_4$-Alkyl und $Z_6$ Wasserstoff, Phenyl, Niederalkyl oder Cyano-Niederalkyl bedeuten.

13. Gemisch nach Anspruch 1, dadurch gekennzeichnet, dass die Oxazinverbindung entsprechend Komponente (f) der Formel (6) entspricht,
worin
$Z_1$ -S- und
$Z_2$ -O- bedeuten und
$X_1$ und $X_2$ die in Anspruch 1 angegebene Bedeutung haben.

14. Gemisch nach Anspruch 1, dadurch gekennzeichnet, dass die 1,3-Benzoxazinverbindung der Komponente (g) der Formel

(16) 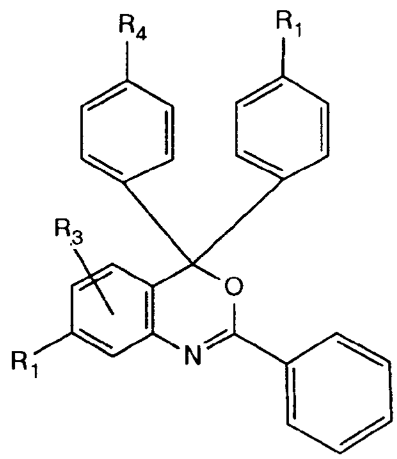

entspricht, worin

$R_1$ einen Rest der Formel

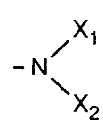 ;

$R_3$ Wasserstoff oder Niederalkyl; und
$R_4$ Wasserstoff; Niederalkyl; Niederalkoxy; Halogen; oder einen Rest der Formel

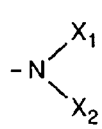

bedeuten; und
$X_1$ und $X_2$ die in Anspruch 1 angegebene Bedeutung haben.

**15.** Gemisch nach einem der Ansprüche 1 bis 14, dadurch gekennzeichnet, dass in dem Gemisch mindestens 3 und höchstens 7 verschiedene der in den Komponenten (a) bis (g) aufgeführten Fabbildner enthalten sind.

**16.** Gemisch nach Anspruch 1, dadurch gekennzeichnet, dass es
10 bis 90 Gew.% der Komponente (a),
90 bis 10 Gew.% der Komponente (b),
0 bis 20 Gew.% der Komponente (c),
0 bis 30 Gew.% der Komponente (d),
0 bis 45 Gew.% der Komponente (e),
0 bis 75 % der Komponente (f) und
0 bis 10 Gew.% der Komponente (g)
enthält.

**17.** Gemisch nach Anspruch 1, dadurch gekennzeichnet, dass es
die Komponente (a) und
die Komponente (b) enthält.

**18.** Gemisch nach Anspruch 1, dadurch gekennzeichnet, dass es
die Komponente (a),
die Komponente (b),
die Komponente (c), und gegebenenfalls
die Komponente (e)
enthält.

**19.** Gemisch nach Anspruch 1, dadurch gekennzeichnet, dass es
als Komponente (a)
15 bis 90 Gew.% mindestens einer Fluoran-Verbindung der Formel (1), worin
$R_1$ einen Rest der Formel

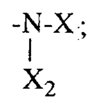

$X_1$, $X_2$ und $R_4$ unabhängig voneinander, Niederalkyl und
$R_2$ Niederalkyl; Mononideralkylamino; Diniederalkylamino; Phenylamino;
Diphenylamino; N-Phenylniederalkyl-N-niederalkylamino;
N,N-Phenylniederalkylamino;oder einen Rest der Formel -(CO)X;
$R_3$ Wasserstoff oder Niederalkyl;
$R_5$ Wasserstoff; Halogen; Niederalkyl; $-NO_2$; einen Rest der Formel

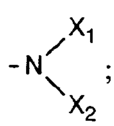

X Wasserstoff; Hydroxy; $C_1$-$C_8$-Alkyl; oder $C_1$-$C_8$-Alkoxy; und
$Z_1$, $Z_2$ und $Z_3$ -O-
bedeuten,
und als Komponente (b)
85 bis 15 Gew.% mindesetens einer Phthalid-Verbindung der Formel (2), worin
$T_1$ und $T_2$ unabhängig voneinander einen Rest der Formel

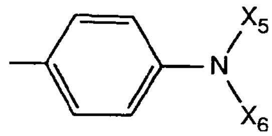

oder

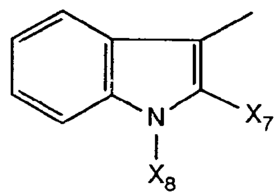

$X_5$, $X_6$, $X_7$ und $X_8$ unabhängig voneinander Wasserstoff oder $C_1$-$C_{12}$-Alkyl
$R_5$ Wasserstoff oder Niederalkyl,
$Z_1$ und $Z_2$ Sauerstoff bedeuten und
der Ring A nicht weiter substituiert ist,
als Komponente (c)
0 bis 25 Gew.% der Triarylmethanverbindung der Formel (9), worin
$X_1$ und $X_2$ die in Anspruch 1 angegebene Bedutungen haben, und
als Komponente (f)
0 bis 25 Gew.% der Oxazinverbindung der Formel (6), worin
$Z_1$-S- und
$Z_2$ -O- bedeutet,
enthält.

**20.** Gemisch nach Anspruch 18, dadurch gekennzeichnet, dass es aus den Komponenten (a) und (b) beseteht.

**21.** Gemisch nach Anspruch 16, dadurch gekennzeichnet, dass es aus
der Komponente (a),
der Komponente (b) und
der Komponente (c) besteht.

**22.** Gemisch nach Anspruch 18, dadurch gekennzeichnet, dass es aus
der Komponente (a),
der Komponente (b),
der Komponente (c) und
der Komponente (f)
besteht.

**23.** Gemisch nach einem der Ansprüche 20 bis 22, dadurch gekennzeichnet, dass es sich aus 4 bis 6 Einzelverbindungen zusammensetzt.

**24.** Verfahren zur Herstellung eines Gemisches aus Farbbildnern in Pastillenform, dadurch gekennzeichnet, dass man die pulverförmigen Einzelkomponenten (a), (b) und gegebenenfalls (c), (d), (e), (f) und (g) mischt, anschliessend die pulvrige Mischung bei einer Temperatur von 90 bis 250°C zur Schmelze erhitzt und dann die Schmelze zur Pastillierung auf eine kalte Unterlage tropfen lässt.

**25.** Verfahren zur Herstellung eines Gemisches aus Farbbildnern in Pastillenform, dadurch gekennzeichnet, dass man die pulverförmigen Einzelkomponenten (a), (b) und gegebenenfalls (c), (d), (e) (f) und (g) in einem organischen Lösungsmittel auflöst und danach bei erhöhter Temperatur das Lösungsmittel abdampft.

**26.** Verwendung des Gemisches nach einem der Ansprüche 1 bis 23 für druck- und wärmeempfindliche Aufzeichnungmaterialen.

Europäisches Patentamt

# EUROPÄISCHER RECHERCHENBERICHT

Nummer der Anmeldung
EP 95 81 0148

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | GB-A-2 239 872 (CIBA GEIGY AG) 17.Juli 1991<br>* Zusammenfassung *<br>--- | 1-26 | C09B67/00<br>B41M5/145 |
| Y | EP-A-0 201 225 (MOORE BUSINESS FORMS INC) 12.November 1986<br>* Spalte 4, Zeile 41 - Spalte 6, Zeile 38; Beispiele *<br>--- | 1-26 | |
| Y | US-A-3 940 275 (BROCKETT BRUCE W ET AL) 24.Februar 1976<br>* Spalte 1, Zeile 39 - Zeile 64; Beispiele *<br>--- | 1-26 | |
| A | EP-A-0 193 200 (BASF AG) 3.September 1986<br>* Zusammenfassung *<br>--- | 1-26 | |
| A | EP-A-0 373 416 (BAYER AG) 20.Juni 1990<br>* Zusammenfassung *<br>----- | 1-26 | |

RECHERCHIERTE SACHGEBIETE (Int.Cl.6)

C09B
B41M

Der vorliegende Recherchenbericht wurde für alle Patentansprüche erstellt

| Recherchenort | Abschlußdatum der Recherche | Prüfer |
|---|---|---|
| DEN HAAG | 29.Juni 1995 | Dauksch, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)